(19) Europäisches Patentamt
European Patent Office
Office européen des brevets

(11) Veröffentlichungsnummer: **0 185 248**
**B1**

(12) **EUROPÄISCHE PATENTSCHRIFT**

(45) Veröffentlichungstag der Patentschrift: **03.10.90**

(51) Int. Cl.[5]: **C 08 G 18/08**, C 08 G 18/83, G 03 C 1/00

(21) Anmeldenummer: **85115380.9**

(22) Anmeldetag: **04.12.85**

# (54) Neuartige Polyadditions- bzw. Polykondensationsprodukte, deren wässrige Dispersion, sowie ein fotografisches Aufzeichnungsmaterial, das eine fotografisch nützliche Verbindung in Form solcher polymerer Produkte enthält.

(30) Priorität: **15.12.84 DE 3445790**

(43) Veröffentlichungstag der Anmeldung:
**25.06.86 Patentblatt 86/26**

(45) Bekanntmachung des Hinweises auf die Patenterteilung:
**03.10.90 Patentblatt 90/40**

(84) Benannte Vertragsstaaten:
**BE DE FR GB**

(56) Entgegenhaltungen:
**EP-A-0 014 921**
**EP-A-0 049 399**
**FR-A-1 505 736**

(73) Patentinhaber: **Agfa-Gevaert AG**
**D-5090 Leverkusen 1 (DE)**

(72) Erfinder: **Helling, Günter, Dr.**
**In der Hildscheid 16**
**D-5068 Odenthal (DE)**
Erfinder: **Reiff, Helmut, Dr.**
**Walter-Flex-Strasse 16**
**D-5090 Leverkusen 1 (DE)**
Erfinder: **Kunitz, Friedrich-Wilhelm, Dr.**
**Walter-Flex-Strasse 20**
**D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 185 248 B1

**Beschreibung**

Die Erfindung betrifft neuartige Polyadditions- bzw. Polykondensationsprodukte sowie ein fotografisches Aufzeichnungsmaterial mit mindestens einer lichtempfindlichen Silberhalogenidemulsionsschicht, das eine fotografisch nützliche Verbindung in Form solcher Polyadditions- bzw. Polykondensationsprodukte enthält.

Fotografische Aufzeichnungsmaterialien sind bekanntlich äußerst kompliziert aufgebaute Produkte und enthalten in der Regel eine Vielzahl von anorganischen und organischen Bestandteilen. Hierunter verdienen besondere Erwähnung solche Verbindungen, die in dem Aufzeichnungsmaterial zunächst in gleichförmiger Verteilung enthalten sind, aber unter den Entwicklungsbedingungen nach Maßgabe einer vorausgegangenen bildmäßigen Belichtung bildmäßig einer chemischen Reaktion unterliegen unter Erzeugung gewünschter farbiger oder nicht farbiger Reaktionsprodukte in bildmäßiger Verteilung. Derartige Verbindungen sollen im vorliegenden Zusammenhang als fotografisch nützliche Verbindungen bezeichnet werden. Fotografisch nützliche Verbindungen in diesem Sinn sind beispielsweise fotografische Kuppler, die als Folge einer Kupplungsreaktion mit Entwickleroxidationsprodukten farbige oder nicht farbige Kupplungsprodukte zu bilden vermögen, gegebenenfalls unter Freisetzung eines Molekülrestes, der direkt, z.B. als Farbstoff, oder indirekt, z.B. als Entwicklungsinhibitor oder Entwicklungsakzelerator zum Aufbau des Bildes beizutragen imstande ist. Fotografisch nützliche Verbindungen in diesem Sinn sind weiterhin beispielsweise Verbindungen (fotografische Redoxverbindungen), die als Folge einer Elektronenübertragung einen Molekülrest freizusetzen vermögen, der direkt oder indirekt zum Aufbau des Bildes beizutragen imstande ist. Beispiele für fotografische Kuppler sind Farbkuppler (z.B. Gelb-, Magenta-, Cyankuppler), Weißkuppler, Maskenkuppler, DIR-Kuppler; Beispiele für fotografische Redoxverbindungen sind oxidierbare oder reduzierbare Verbindungen, die als Folge einer Oxidation bzw. Reduktion einen Farbstoff freizusetzen vermögen (Farbabspalter).

Es ist in der Regel erwünscht, daß die fotografische nützlichen Verbindungen in den Schichten der fotografischen Aufzeichnungsmaterialien möglichst wenig diffundieren. Zu diesem Zweck sind sie normalerweise mit Ballastresten versehen, z.B. mit gradkettigen oder verzweigten Alkylresten mit 8 bis 20 C-Atomen. Es ist auch bekannt die fotografisch nützlichen Verbindungen in Form von Polymerisatdispersionen zu verwenden, in denen der funktionelle Rest einer solchen fotografisch nützlichen Verbindung ein- oder mehrfach mit einem Polymergerüst verknüpft und auf diese Weise diffusionsfest gemacht ist. Ein solches Polymer weist somit wiederkehrende Struktureinheiten mit dem funktionellen Rest der betreffenden fotografisch nützlichen Verbindung auf.

Fotografisch nützliche Verbindungen, die in Form solcher Polymerisatdispersionen in die Schichten von fotografischen Aufzeichnungsmaterialien eingearbeitet sind, sind im allgemeinen ausreichend diffusionsrest und beeinträchtigen die mechanischen Eigenschaften der Schichten auch bei geringen Bindemittelgehalten nur wenig. Wenn es sich um Farbkuppler handelt, dann ist es besonders wichtig, daß sie bei der Lagerung nicht auskristallisieren, eine gute Stabilität gegen Licht, Wärme und Feuchtigkeit aufweisen und daß auch die daraus erzeugten Farbstoffe stabil sind, die erwünschten spektralen Eigenschaften aufweisen und bei der Entwicklung diffusionsfest und als möglichst feines Korn abgeschieden werden. Farbkuppler, die in Form solcher Polymerisatdispersionen mit einem Molekulargewicht größer als 5000 in fotografische Aufzeichnungsmaterialien eingearbeitet sind, weisen allgemein gute Kolloidstabilität auf und erfüllen einige der genannten an sie gerichteten Forderungen recht gut. Solche hochmolekularen Farbkuppler sind beispielsweise beschrieben in DE—C—1 297 417, DE—A—24 07 569, DE—A—31 48 125, DE—A—32 17 200, DE—A—33 20 079, DE—A—33 24 932, DE—A—33 31 743, DE—A—33 40 376, EP—A—27 284, US—A—4 080 211. Die hochmolekularen Farbkuppler werden in der Regel durch Polymerisation von ethylenisch ungesättigten sogenannten monomeren Farbkupplern hergestellt. Sie erweisen sich jedoch mindestens insoweit als nachteilig als zu ihrer Herstellung vergleichsweise hohe Emulgatormengen (z.B. 5—8%, bezogen auf den polymeren Kuppler) erforderlich sind, was bei der Verarbeitung eine unerwünschte Schaumbildung zur Folge hat mit der weiteren Folge, daß die mit solchen Polymerisatdispersionen vergossenen Schichten häufig Punktfehler, Streifen oder ähnliche Beschichtungsfehler aufweisen.

Um die Neigung zum Schäumen zu reduzieren wurde empfohlen, einpolymerisierbare Emulgatoren zu verwenden (DE—A—24 07 569, EP—A—27 284). Jedoch konnte hierdurch das Problem nicht befriedigend gelöst werden, weil Restanteile des verwendeten monomeren Emulgators oder dessen bei der Polymerisation gebildete Hydrolyseprodukte im Serum des erzeugten Latex verbleiben. Die durch Polymerisation hergestellten polymeren Latexkuppler zeigen weiterhin keine ausreichende Stabilität der bei der Entwicklung gebildeten Bildfarbstoffe gegenüber Wärme, Feuchtigkeit oder der Einwirkung von UV-Licht. Ein weiterer Nachteil der bekannten hochmolekularen Farbkuppler besteht darin, daß sie im Vergleich mit niedermolekularen, unter Verwendung von Ölbildnern eingearbeiteten Farbkupplern zwar eine höher Naßkratzfestigkeit, aber auch eine geringere Bruchfestigkeit der fotografischen Aufzeichnungsmaterialien bewirken.

Der Erfindung liegt die Aufgabe zugrunde, fotografisch nützliche Verbindungen, insbesondere fotografische Kuppler oder Farbspalter, in Form von emulgatorfrei herstellbaren Polymerdispersionen anzugeben, die weniger zum Schäumen neigen und bei Einarbeitung in fotografische Kolloidschichten verbesserte mechanische Eigenschaften ergeben und keine Beschichtungsfehler hervorrufen. Weiterhin

sollen, wenn es sich bei den fotografisch nützlichen Verbindungen um Farbkuppler handelt, die bei Entwicklung erzeugten Bildfarbstoffe erhöhte Stabilität gegenüber Wärme, Feuchtigkeit oder UV-Licht aufweisen.

Die Aufgabe wurde gelöst mit neuartigen hochmolekularen Polyadditions- bzw. Polykondensationsprodukten, die wiederkehrende Struktureinheiten der folgenden Formel I enthalten:

$$Q\text{-}(Y)_n \qquad I$$

worin bedeuten

Q den n-bindigen Rest einer fotografisch nützlichen Verbindung

Y —O— oder —$NR^1$—

$R^1$ H, Alkyl mit 1 bis 6 C-Atomen, Cycloalkyl oder Phenyl

n eine Zahl von 2 bis 4, vorzugsweise 2

Q ist der Rest einer fotografisch nützlichen Verbindung wie zuvor definiert, nämlich einer Verbindung, die, wenn sie in ein fotografisches Aufzeichnungsmaterial mit mindestens einer lichtempfindlichen Silberhalogenidemulsionsschicht eingearbeitet ist, unter den Entwicklungsbedingungen nach Maßgabe einer vorausgegangenen bildmäßigen Belichtung einer chemischen Reaktion unterliegt unter Erzeugung gewünschter farbiger oder nicht farbiger Reaktionsprodukte in bildmäßiger Verteilung. Q ist demnach z.B. der Rest eines Kupplers oder einer fotografischen Redoxverbindung, die erfindungsgemäß durch Verknüpfung mit einem Polymergerüst ausreichend hochmolekular und dadurch diffusionsfest gemacht worden ist.

Bei den Resten von Kupplern kann es sich sowohl um Reste üblicher 4-Äquivalentkuppler handeln als auch um Reste von 2-Äquivalentkupplern, bei denen zur Farberzeugung eine geringere Menge Silberhalogenid erforderlich ist. 2-Äquivalentkuppler leiten sich bekanntlich von den 4-Äquivalentkupplern dadurch ab, daß sie in der Kupplungsstelle einen Substituenten enthalten, der bei der Kupplung abgespalten wird. Zu den 2-Äquivalentkupplern sind sowohl solche zu rechnen, die praktisch farblos sind, als auch solche, die eine intensive Eigenfarbe aufweisen, die bei der Farbkupplung verschwindet bzw. durch die Farbe des erzeugten Bildfarbstoffes ersetzt wird. Letztere Kuppler können als Maskenkuppler zur Kompensierung der unerwäunschten Nebendichten der Bildfarbstoffe dienen. Zu den 2-Äquivalentkupplern sich auch die bekannten Weißkuppler zu rechnen, die jedoch bei Reaktion mit Farbentwickleroxidationsprodukten keinen Farbstoff ergeben und somit nur indirekt zum Aufbau des Farbbildes beitragen. Zu den 2-Äquivalentkupplern sind ferner die bekannten DIR-Kuppler zu rechnen, bei denen es sich um Kuppler handelt, die in der Kupplungsstelle einen abspaltbaren Rest enthalten, der bei Reaktion mit Farbentwickleroxidationsprodukten als diffundierender Entwicklungsinhibitor in Freiheit gesetzt wird. Auch andere fotografisch wirksame Verbindungen wie beispielsweise keimbildende oder verschleiernde Agentien, die als Entwicklungsakzelerator wirken können, oder Härtungsmittel oder Bleichkatalysatoren können aus solchen 2-Äquivalentkupplern bevorzugt in diffusionsfähiger Form freigesetzt und dadurch aktiviert werden. Als Farbkuppler können die Kuppler bei der Entwicklung gelbe, purpurne oder blaugrüne Farbstoffe der verschiedensten Farbabstufungen bilden, je nach ihrer chemischen Struktur. Da die hierfür in Frage kommenden Strukturen dem Fachmann ausreichend geläufig sind, bedarf es an dieser Stelle nicht ihrer ausführlichen Erläuterung.

Bei den Resten von Farbabspaltern kann es sich um Reste einer Vielfalt von Verbindungstypen handeln, die sich sämtlich durch einen Chromophor und ein in seiner Bindungsfestigkeit redoxabhängiges Bindeglied auszeichnen, welches den Chromophor mit dem diffusionsfest machenden Polymergerüst verknüpft. Solche Verbindungen enthalten demnach eine Gruppe der Formel

—REDOX—FARBSTOFF,

worin bedeuten

REDOX eine redoxaktive Gruppe, d.h. eine Gruppe, die unter den Bedingungen der alkalischen Entwicklung oxidierbar oder reduzierbar ist und je nachdem, ob sie im oxidierten oder im reduzierten Zustand vorliegt, in unterschiedlichem Ausmaß einer Eliminierungsreaktion, einer nukleophilen Verdrängungsreaktion, einer Hydrolyse oder einer sonstigen Spaltungsreaktion unterliegt mit der Folge, daß der Rest FARBSTOFF abgespalten wird, und

FARBSTOFF den Rest eines diffusionsfähigen Farbstoffes.

Redoxaktive Gruppen und Farbabspalter mit solchen redoxaktiven Gruppen sind in den verschiedensten Ausführungsformen bekannt. Eine detaillierte Darstellung findet man in dem Übersichtsartikel von Christian C. Van de Sande in Angew. Chem. *95,* S. 165—184 (1983). Selbstverständlich kann der durch Q dargestellte Rest einer fotografischen Redoxverbindung anstelle eines Farbstoffrestes einen sonstigen abspaltbaren Rest enthalten, der gegebenenfalls nach bildmäßiger Freisetzung indirekt zum Bildaufbau beizutragen imstande ist, z.B. einen Entwicklungsinhibitor, Entwicklungsakzelerator oder eine Verbindung die mit Entwickleroxidationsprodukten unter Verbrauch der letzteren zu reagieren vermag.

Bevorzugte Beispiele der erfindungsgemäßen Polyadditions- bzw. Polykondensationsprodukte enthalten wiederkehrende Struktureinheiten der folgenden Formel II:

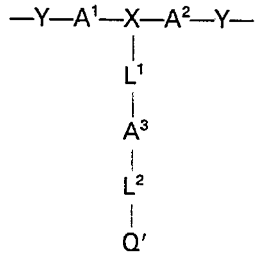

worin bedeuten

Q' entweder alleine oder zusammen mit X (unter Einbeziehung von $-L^1-A^3-L^2-$) den Rest einer fotografisch nützlichen Verbindung

X 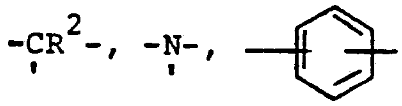 oder 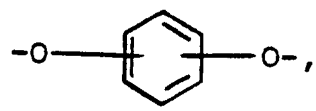

Y $-O-$ oder $-NR^1-$

$A^1$, $A^2$ Alkylen mit 1 bis 4 C-Atomen

$A^3$ Alkylen mit 1 bis 8 C-Atomen, Arylen oder eine chemische Bindung

$L^1$ $-CONH-$, $-NHCO-$, $-CO-$, $-SO_2-$, $-O-$ oder eine chemische Bindung

$L^2$ $-CONH-$, $-NH-$, $-O-$ oder eine chemische Bindung

$R^1$ H, Alkyl mit 1 bis 6 C-Atomen, Cycloalkyl oder Phenyl

$R^2$ H oder Alkyl mit 1 bis 4 C-Atomen.

Bei den in Formel II durch Q' dargestellten Resten fotografisch nützlicher Verbindungen handelt es sich grundsätzlich um die gleiche Art von Resten fotografisch nützlicher Verbindungen, wie sie auch in Formel I durch Q dargestellt und definiert werden. Der Unterschied liegt im wesentlichen nur darin, daß nach Formel II die Anknüpfung der fotografisch nützlichen Verbindung an das Polymergerüst mit beiden Verknüpfungsstellen über denselben Molekülteil erfolgt, während nach Formel I die Anknüpfung offengelassen ist.

Als Ausgangsmaterial für die wiederkehrenden Struktureinheiten der Formel I eignen sich Verbindungen der allgemeinen Formel III

$$H-Y-Q(-Y-H)_{n-1} \qquad III$$

worin Y, Q und n die bereits angegebene Bedeutung haben.

Beispiele hierfür sind im folgenden aufgeführt.

M-1 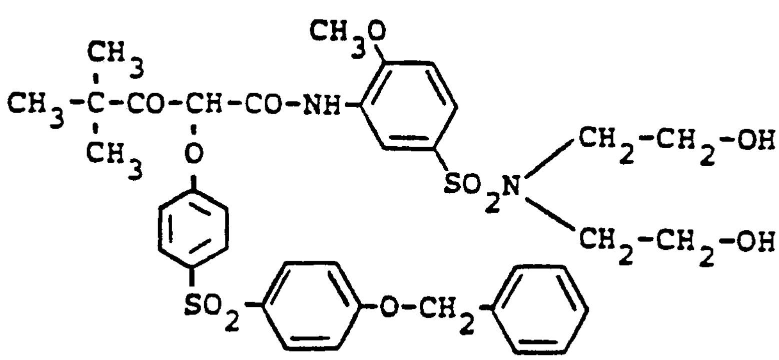

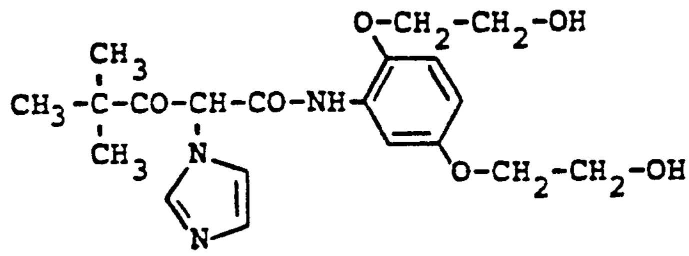

M-2

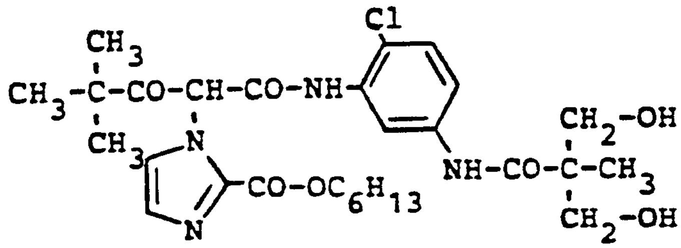

M-3

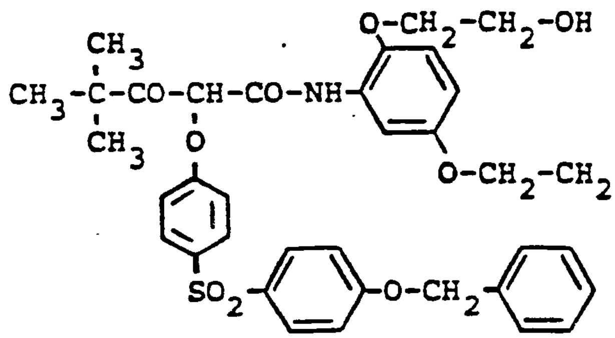

M-4

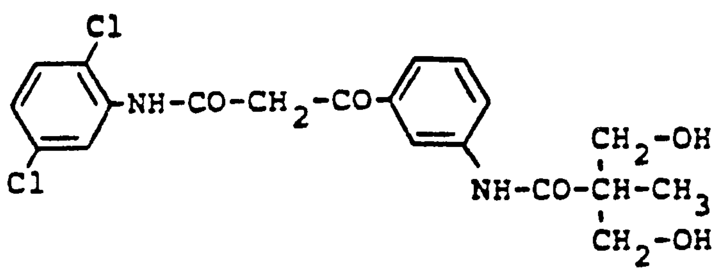

M-5

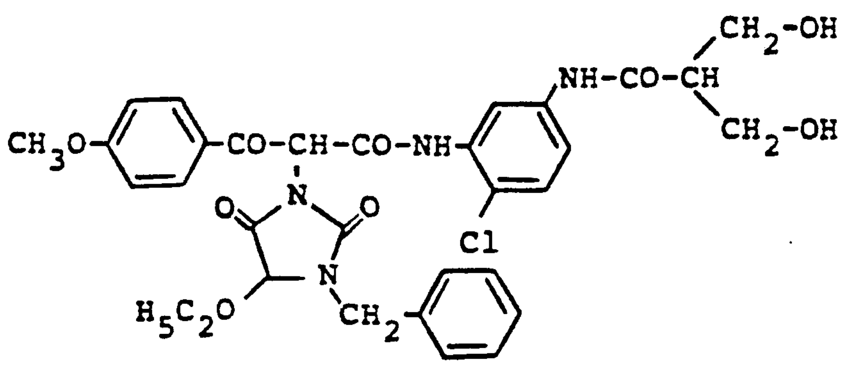

M-6

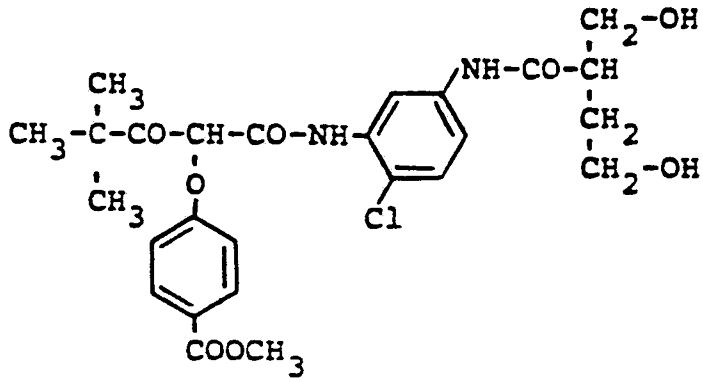

M-7

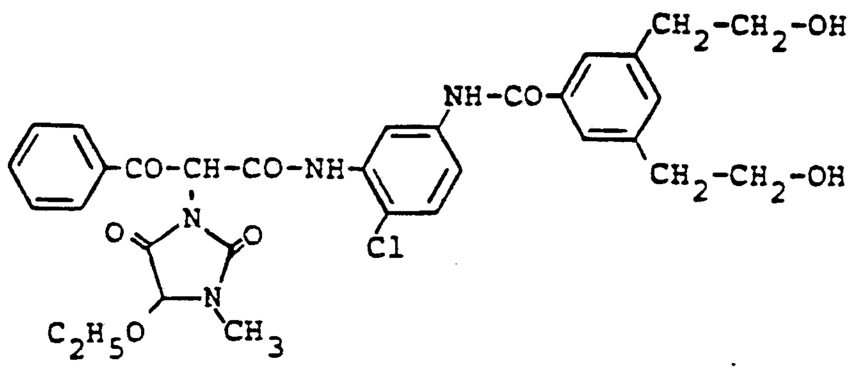

M-8

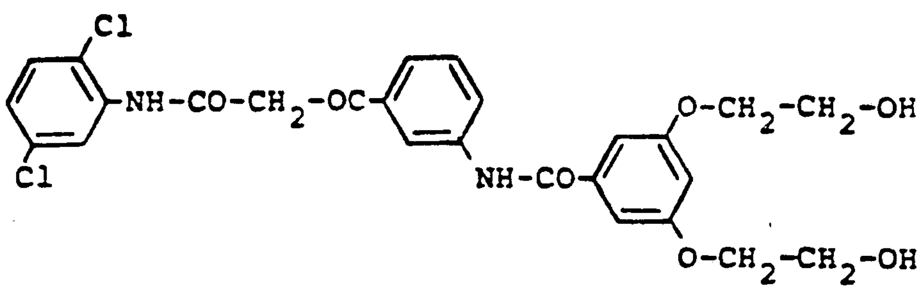

M-9

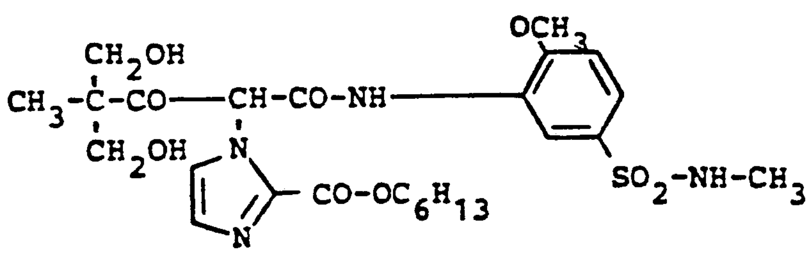

M-10

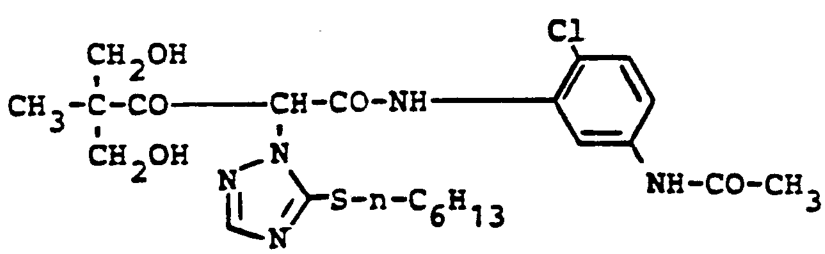

M-11

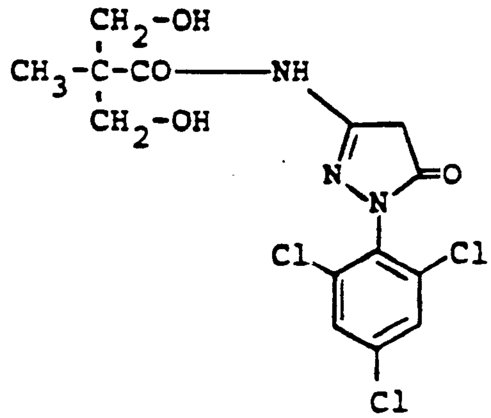

M-12

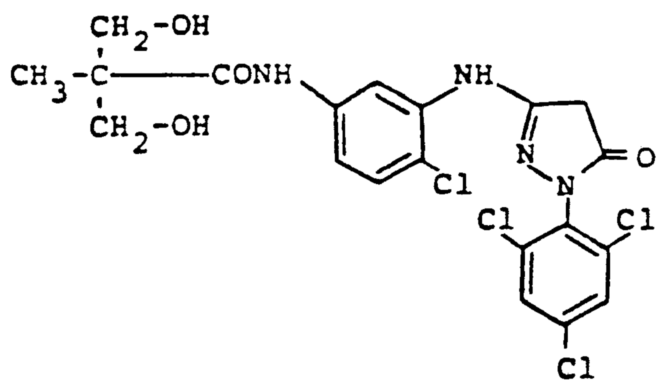

M-13

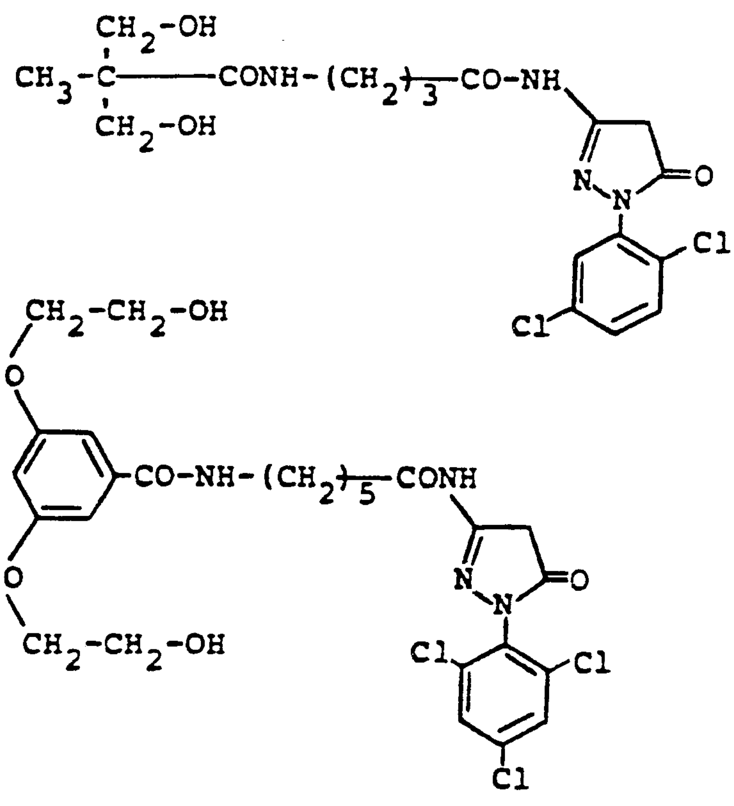

M-14

M-15

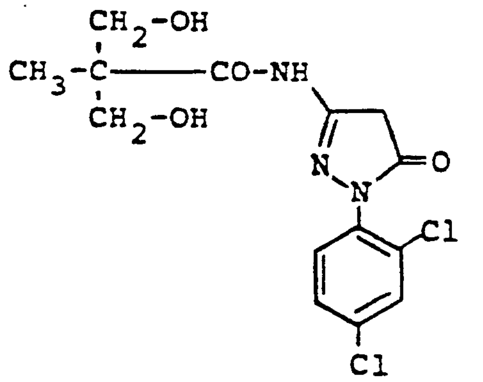

M-16

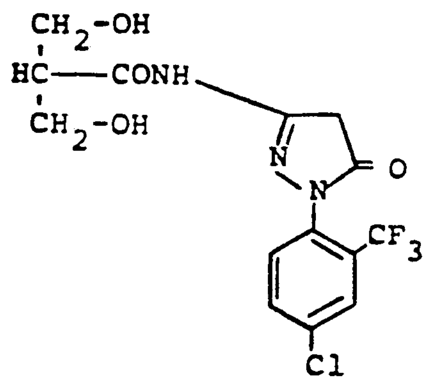

M-17

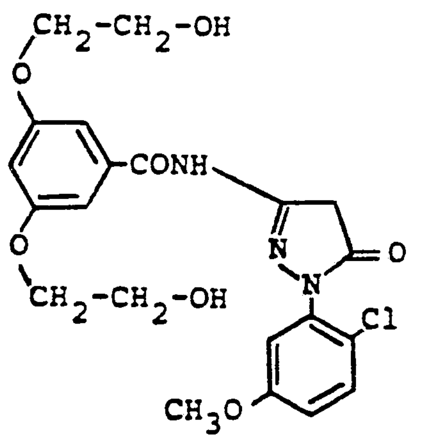

M-18

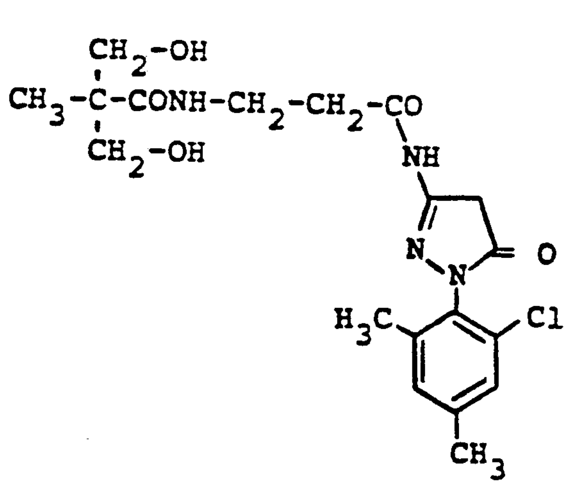

M-19

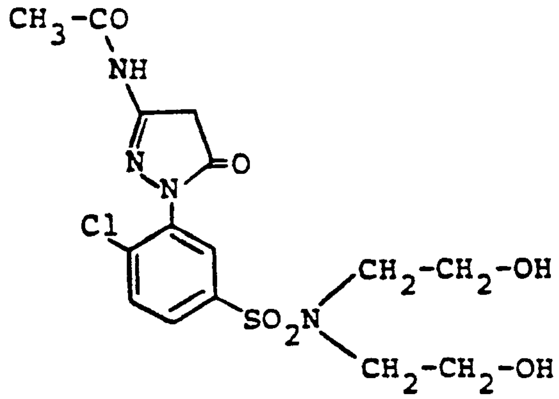

M-20

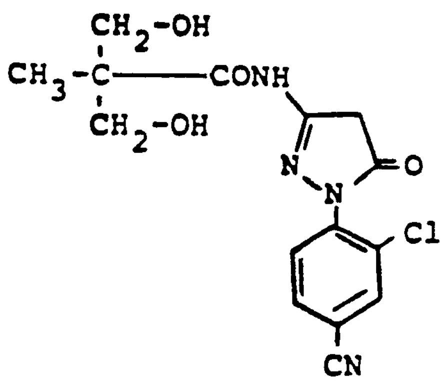

M-21

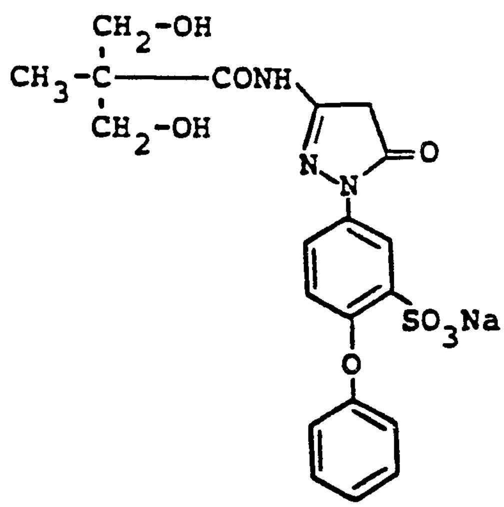

M-22

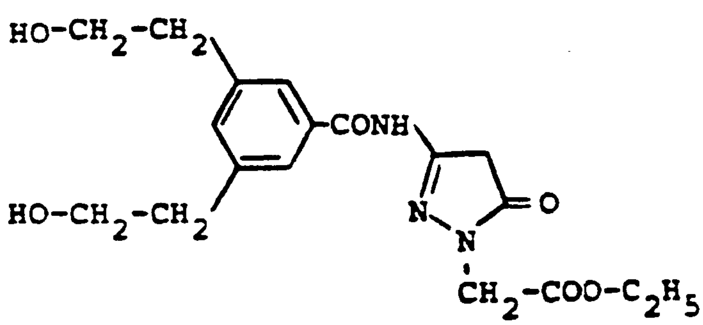

M-23

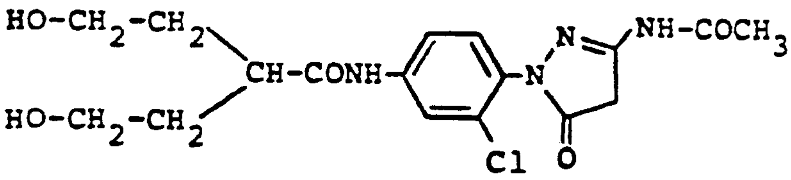

M-24

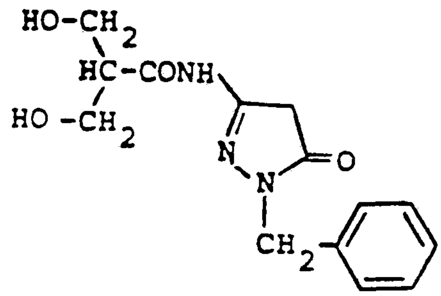

M-25

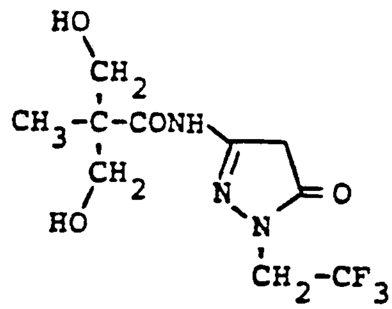

M-26

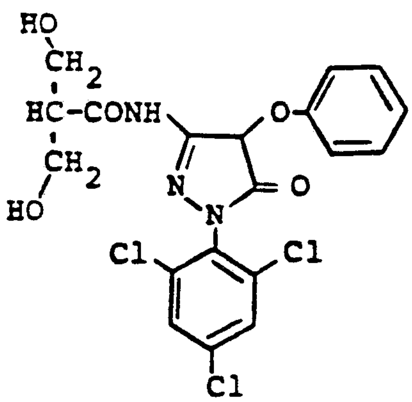

M-27

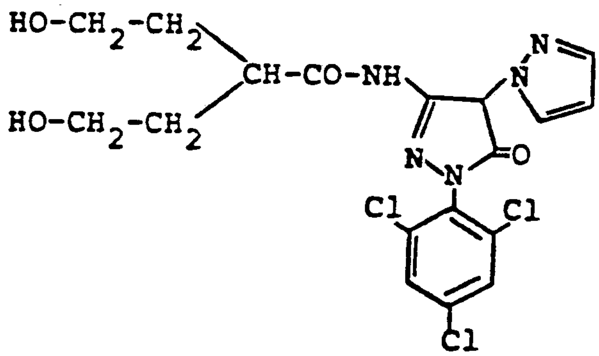

M-28

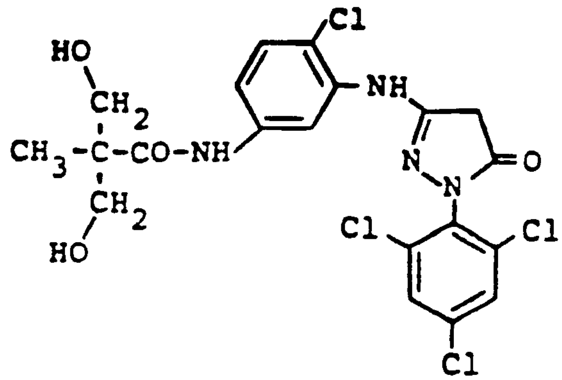

M-29

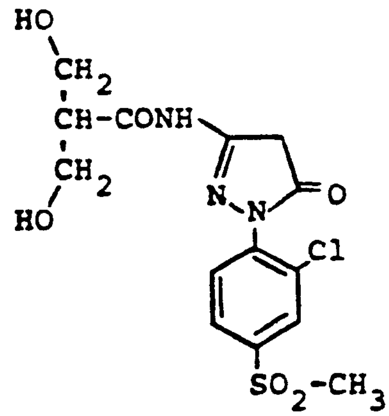

M-30

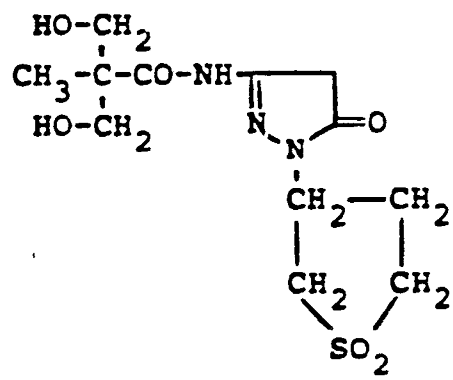

M-31

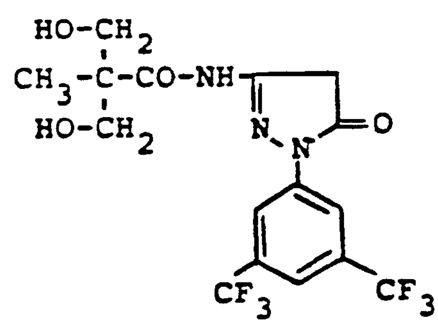

M-32

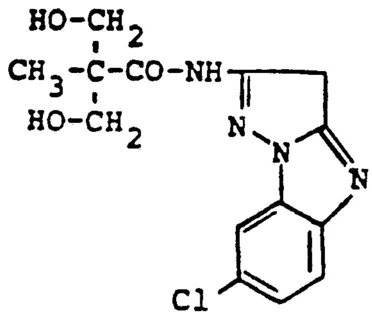

M-33

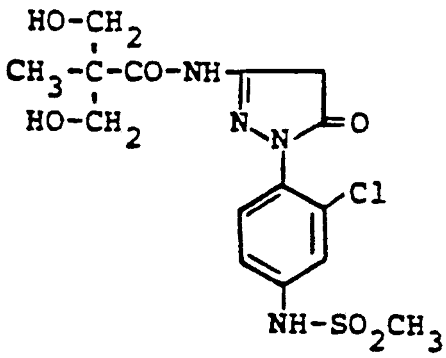

M-34

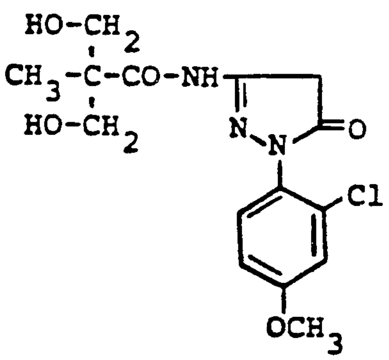

M-35

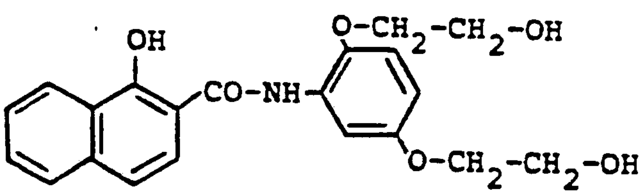

M-36

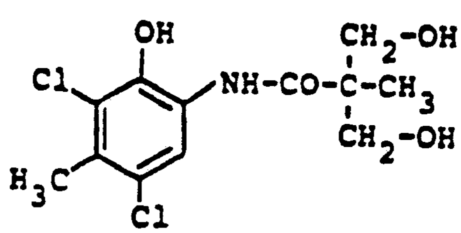

M-37

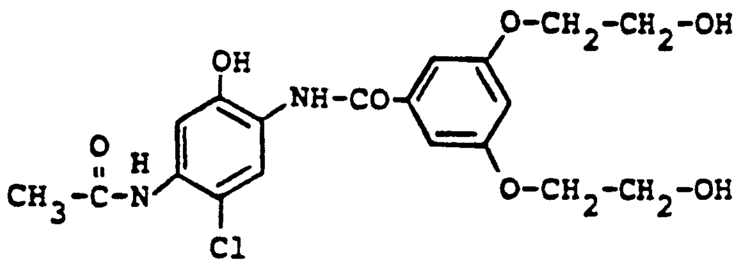

M-38

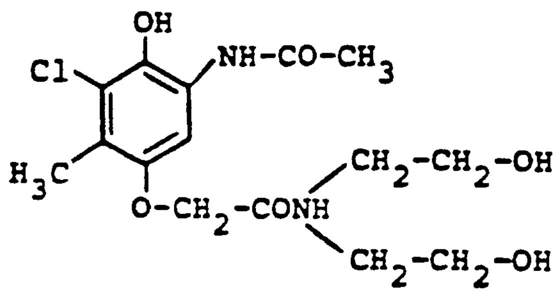

M-39

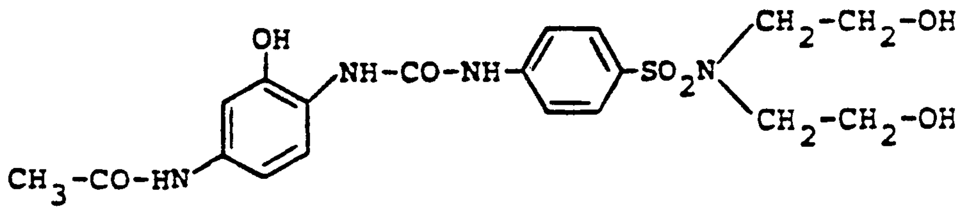

M-40

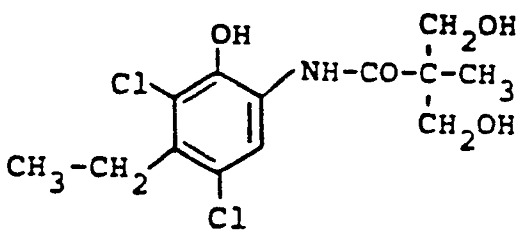

M-41

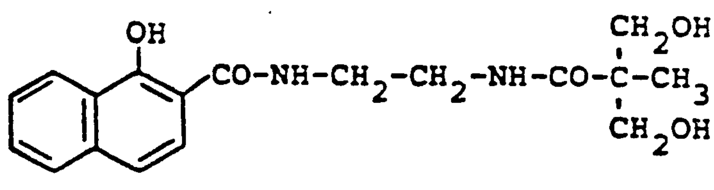

M-42

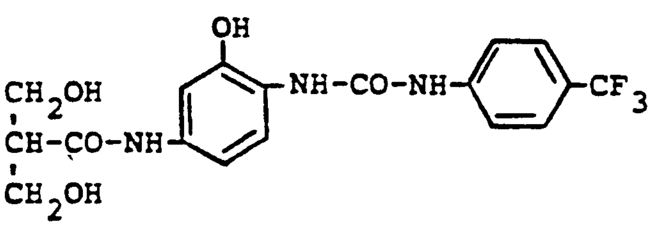

M-43

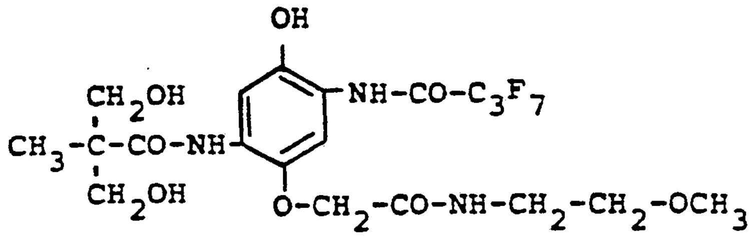

M-44

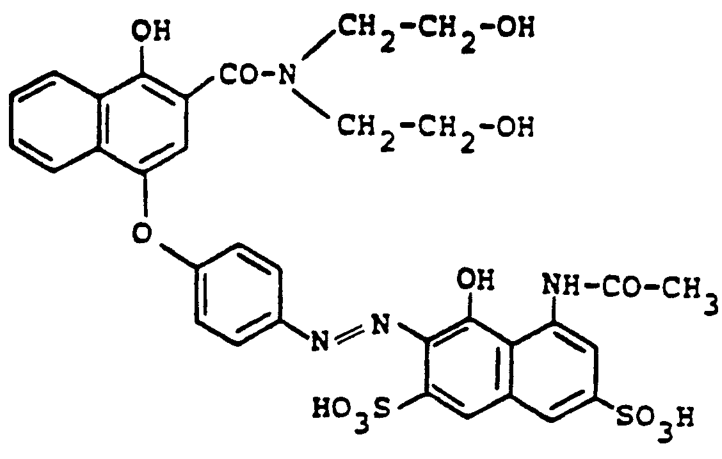

M-45

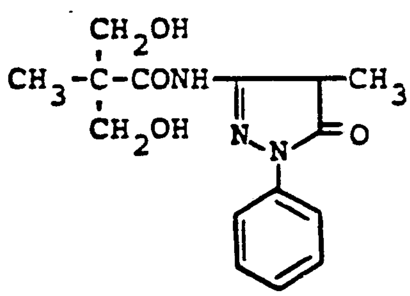

M-46

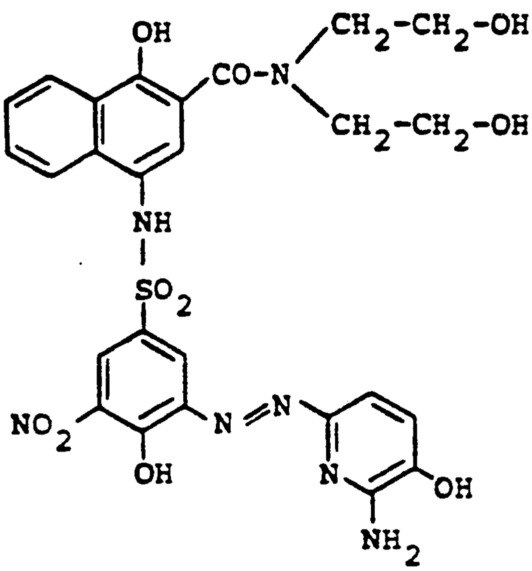

M-47

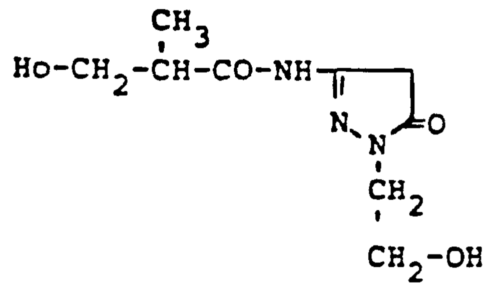

M-48

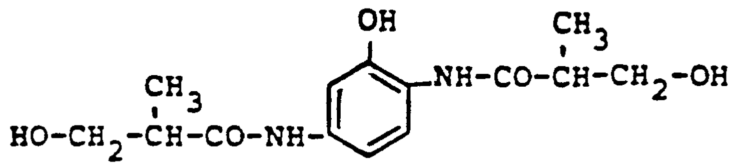

M-49

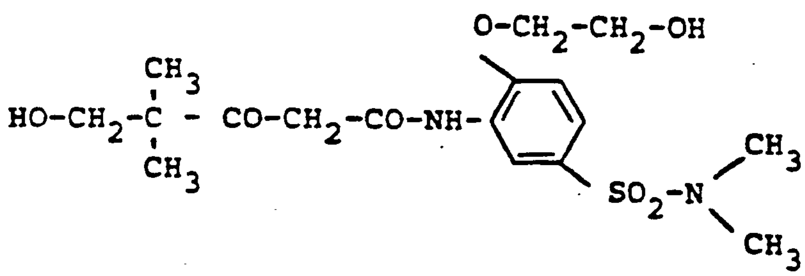

M-50

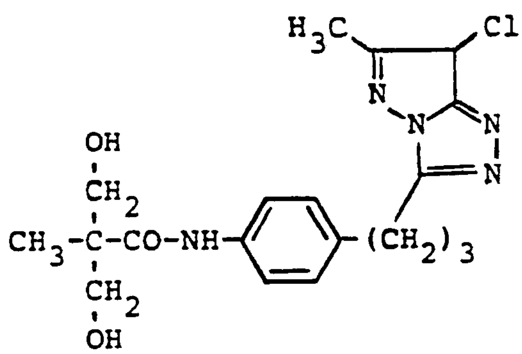

M-51

Die Synthese der Verbindungen der Formel III erfolgt nach grundsätzlich bekannten Methoden. Zur Erläuterung ist im folgenden die Herstellung der monomeren Dihydroxyverbindung M-12 (Purpurkuppler) aufgeführt.

Stufe 1: 2,2-Bisacetoxymethylpropionsäure

268 g (2 mol) 2,2-Bishydroxymethylpropionsäure werden in 800 ml Eisessig und 416 ml (4,4 mol) Essigsäureanhydrid 10 h am Rückfluß gekocht. Die Reaktionslösung wird im Vakuum vom Lösungsmittel befreit. Der ölige Rückstand wird mit 1500 ml Petrolether verrührt. Dabei kristallisiert die Estercarbonsäure aus. Sie wird abgesaugt und mit Petrolether gewaschen. Ausbeute 420 g (96% d.Th.); Fp. 85°C.

Stufe 2: 2,2-Bisacetoxymethylpropionsäurechlorid

218 g (1 mol) 2,2-Bisacetoxymethylpropionsäure (Stufe 1) werden mit 182 ml (2,5 mol) Thionylchlorid übergossen und 8 h lang bei einer Badtemperatur von ca. 100°C am Rückfluß gekocht. Überschüssiges Thionylchlorid wird unter Wasserstrahlvakuum abdestilliert. Es resultiert ein schwach gelbes öliges Produkt. Ausbeute 236 g (100% d.Th.).

Stufe 3: Verbindung M-12

111,4 g (0,4 mol) 1-(2,4,6-Trichlorphenyl)-3-aminopyrazolon(5) werden in 500 ml Acetonitril angeschlemmt. Es werden 77,2 ml (0,8 mol) Pyridin hinzugegeben. Bei Raumtemperatur werden 189 g (0,8

mol) 2,2-Bisacetoxymethylpropionsäurechlorid innerhalb von 20 min eingetropft. Das Aminopyrazolon geht dabei in Lösung.

Die Reaktionslösung wird in eine Mischung von 2,5 l Eis/Wasser und 500 ml konz. Salzsäure ausgerührt. Die wäßrige Phase wird von Öl abdekantiert. Das Öl wird noch 2 mal mit Wasser verrührt und dekantiert.

Das rohe, noch feuchte Öl wird in 1000 ml Alkohol gelöst und mit 5n NaOH zunächst neutral gestellt. Die Lösung wird mit 400 ml 5n NaOH (2 mol) bei Raumtemperatur versetzt. Nach 30 min wird mit Aktivkohle behandelt, filtriert und mit Essigsäure sauergestellt. Die Lösung wird in 5 l Wasser eingerührt. Nach 2 h wird das krist. Produkt abgesaugt und mit Wasser und Methanol gewaschen.

Es werden 86 g (54% d.Th.) eines schwach gelblichen Kristallisates vom Fp. 227—229°C erhalten.

In den erfindungsgemäßen hochmolekularen Polyadditions- bzw. Polykondensationsprodukten sind die einzelnen Strukturelemente der Formeln I bzw. II untereinander durch wiederkehrende Struktureinheiten der folgenden Formel IV verknüpft,

$$-CO-NH-Z-(NH-CO-)_p \qquad IV$$

worin Z ein (p + 1)-bindiges organisches Bindeglied bedeutet und p 1 ist. Es handelt sich somit bei den erfindungsgemäßen Polyadditions- bzw. Polykondensationsprodukten um Polyharnstoff- oder Polyurethanverbindungen, die darüber hinaus in der Gruppe Z noch Polyether- und/oder Polyesterstruktur sowie gegebenenfalls weitere Ureido- und/oder Urethangruppen sowie ferner auch hydrophile Reste aufweisen können.

Geeignete Ausgangsmaterialien für die Struktureinheiten der Formel IV sind Verbindungen, die mindestens 2 Isocyanatgruppen aufweisen. Als solche kommen in Frage monomere Polyisocyanate und deren Gemische, mehrfunktionelle sogenannte NCO-Präpolymere und deren Gemische, sowie auch Gemische von monomeren Polyisocyanaten und mehrfunktionellen NCO-Präpolymeren (Semipräpolymere). Beim bevorzugten Einsatz von Verbindungen mit 2 Isocyanatgruppen werden erfindungsgemäß lineare hochmolekulare Polyadditionsverbindungen erhalten, in denen die einzelnen Strukturelemente der Formel I bzw. II untereinander durch wiederkehrende Struktureinheiten der Formel IVa verknüpft sind

$$-CO-NH-Z'-NH-CO- \qquad IVa$$

worin Z' den zweiwertigen Rest einer Diisocyanatverbindung bedeutet.

Bei den monomeren Polyisocyanaten handelt es sich in erster Linie um Diisocyanate, wie sie nachstehend auch als Ausgangsmaterialien zur Herstellung der NCO-Präpolymere erwähnt werden. Bei den NCO-Präpolymeren handelt es sich beispielsweise um solche, die eine oder mehrere ihre Löslichkeit bzw. Dispergierbarkeit in Wasser bedingende hydrophile Gruppierung(en) aufweisen. Der genaue chemische Aufbau der NCO-Präpolymeren ist jedoch nicht kritisch. Dies bedeutet insbesondere, daß erfindungsgemäß alle NCO-Präpolymeren geeignet sind, die bislang bereits bei der Herstellung von wäßrigen Polyurethan-Dispersionen oder -lösungen zum Einsatz gelangten. Ihre Herstellung erfolgt nach bekannten Verfahren des Standes der Technik und ist beispielsweise in DE—A—1 495 745, DE—A—1 495 847, DE—A—24 46 440, DE—A—23 40 512, US—A—3 479 310, GB—A—1 158 088 oder GB—A—1 076 688 beschrieben.

Die Herstellung der beim erfindungsgemäßen Verfahren bevorzugt einzusetzenden NCO-Präpolymeren mit chemisch eingebauten hydrophilen Gruppen geschieht in Analogie zu den Methoden, wie sie in den beispielhaft genannten Literaturstellen genannt sind. Ausgangsmaterialien zur Herstellung dieser NCO-Präpolymeren sind demzufolge

1. beliebige organische Polyisocyanate, vorzugsweise Diisocyanate der Formel

$$Z''(NCO)_2$$

wobei Z'' einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet. Beispiele derartiger bevorzugt einzusetzender Diisocyanate sind Tetramethylendiisocyanat, Hexamethylendiisocyanat, Dodecamethylendiisocyanat, 1,4-Diisocyanato-cyclohexan, 1-Isocyanato-3,3,5-trimethylisocyanatomethylcyclohexan, Isophorondiisocyanat, 4,4'-Diisocyanato-dicyclohexylmethan, 4,4'-Diisocyanato-dicyclohexylpropan-(2,2), 1,4-Diisocyanatobenzol, 2,4-Diisocyanatotoluol, 2,6-Diisocyanatotoluol, 4,4'-Diisocyanatodiphenylmethan, 4,4'-Diisocyanato-diphenylpropan-(2,2), p-Xylylen-diisocyanat oder α,α,α',α'-Tetramethyl-m- oder -p-xylylen-diisocyanat, sowie aus diesen Verbindungen bestehende Gemische.

Es ist selbstverständlich auch möglich, die in der Polyurethan-Chemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate (mit)zuverwenden.

2. Beliebige organische Verbindungen mit mindestens zwei gegenüber Isocyanatgruppen reaktionsfähigen Gruppen, insbesondere insgesamt zwei Aminogruppen, Thiolgruppen, Carboxylgruppen und/oder Hydroxylgruppen aufweisende organische Verbindungen der Molekulargewichtsbereichs 62 bis 10 000, vorzugsweise 100 bis 6 000 und insbesondere 500 bis 4 000. Bevorzugt werden die entsprechenden Dihydroxyverbindungen eingesetzt. Die Mitverwendung von im Sinne der Isocyanat-Polyadditionsreaktion tri- oder höher-funktionellen Verbindungen in geringen Anteilen zur Erzielung eines gewissen Verzweigungsgrades ist ebenso möglich wie die bereits erwähnte mögliche Mitverwendung von tri- oder höherfunktionellen Polyisocyanaten zum gleichen Zweck.

Vorzugsweise einzusetzende Hydroxylverbindungen sind die in der Polyurethan-Chemie an sich bekannten Hydroxypolyester, Hydroxypolyether, Hydroxypolythioether, Hydroxypolyacetate, Hydroxypolycarbonate und/oder Hydroxypolyesteramide. Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Carbonsäuren können auch deren Anhydride oder Ester mit niederen Alkoholen zur Herstellung der Polyester verwendet werden. Die mehrwertigen Carbonsäuren können aliphatischer, cycloaliphatischer, aromatischer und/oder heterocyclischer Natur sein und gegebenenfalls, z.B. durch Halogenatome, substituiert und/oder ungesättigt sein. Als Beispiele hierfür seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere un trimere Fettsäuren wie Ölsäure, gegebenenfalls in Mischung mit monomeren Fettsäuren, Terephthalsäuredimethylester, Terephthalsäure-bis-glykolester. Als mehrwertige Alkohole kommen z.B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethylolether, Pentaerythrit, Chinit, Mannit und Sorbit, Methylglykosid, ferner Diethylenglykol, Triethylenglykol, Tetraethylenglykol, Polyethylenglykole, Dipropylenglykol, Polypropylenglykole, Dibutylenglykol und Polybutylenglykole in Frage. Die Polyester können anteilig endständige Carboxylgruppen aufweisen. Auch Polyester aus Lactonen, z.B. ε-Caprolacton oder Hydroxycarbonsäuren, z.B. ω-Hydroxycapronsäure, sind einsetzbar.

Die ebenfalls in Frage kommenden, vorzugsweise zwei Hydroxylgruppen aufweisenden Polyether sind solche der an sich bekannten Art und werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von $BF_3$ oder durch Anlagerung dieser Epoxide, gegebenenfalls im Gemisch oder nacheinander, an Startkomponenten mit reaktionsfähigen Wasserstoffatomen wie Alkohole und Amine, z.B. Wasser, Ethylenglykol, Propylenglykol-(1,3) oder -(1,2), 4,4'-Dihydroxydiphenylpropan, Anilin, hergestellt.

Auch durch Vinylpolymerisate modifizierte Polyether, wie sie z.B. durch Polymerisation von Styrol/Acrylnitril in Gegenwart von Polyethern entstehen (US—A—3 383 351, US—A—3 304 273, US—A—3 523 093, US—A—3 110 695, DE—C—1 152 536), sind ebenfalls geeignet. Die anteilig gegebenenfalls mitzuverwendenden höherfunktionellen Polyether entstehen in analoger Weise durch an sich bekannte Alkoxylierung von höherfunktionellen Startermolekülen z.B. Ammoniak, Ethanolamin, Ethylendiamin oder Sukrose.

Unter den Hydroxypolythioethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den CO-Komponenten handelt es sich bei den Produkten um Polythiomischether, Polythioetherester, Polythioetheresteramide.

Als Hydroxypolyacetale kommen z.B. die aus Glykolen, wie Diethylenglykol, Triethylenglykol, 4,4'-Diethoxy-diphenyldimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diethylenglykol, Triethylenglykol, Tetraethylenglykol mit Diarylcarbonaten, z.B. Diphenylcarbonat oder Phosgen, hergestellt werden können.

Zu den Hydroxylgruppen enthaltenden Polyesteramiden und Polyamiden zählen z.B. die aus mehrwertigen gesättigten und ungesättigten Carbonsäuren bzw. deren Anhydriden und mehrwertigen gesättigten und ungesättigten Aminoalkohlen, Diaminen, Polyaminen und ihren Mischungen gewonenen, vorwiegend linearen Kondensate. Auch bereits Urethan- oder Harnstoffgruppen enthaltende Polyhydroxylverbindungen sind verwendbar.

Auch niedermolekulare Polyole können (mit)verwendet werden, wie z.B. Ethandiol, Propandiol-1,2 und -1,3, Butandiol-1,4 und -1,3, Pentandiole, Hexandiole, Trimethylolpropan, Hexantriole, Glycerin und Pentaerythrit.

Vertreter der erwähnten Polyisocyanate wie auch der Polyhydroxylverbindungen sind z.B. in High Polymers, Vol. XVI, "Polyurethanes, Chemistry and Technology", verfaßt von Saunders-Frisch, Interscience Publishers, New York, London, Band, I, 1962, Seiten 32—42 und Seiten 44—54 und Band II, 1964,

Seiten 5—6 und 198—199, sowie im Kunststoff-Handbuch, Band VII, Vieweg-Höchtlen, Carl-Hanser-Verlag, München, 1966, z.B. auf den Seiten 45 bis 71, beschrieben.

3. Chemisch fixierte hydrophile Gruppen aufweisende, vorzugsweise im Sinne der Isocyanat-Additionsreaktionen mono- und insbesondere difunktionelle Aufbaukomponenten der beispielhaft in den obengenannten Literaturstellen bezüglich der Herstellung von wäßrigen Polyurethandispersionen oder -lösungen beschriebenen Art, d.h. beispielsweise ionische bzw. potentielle ionische Gruppen aufweisende Diisocyanate, Diamine oder Dihydroxyverbindungen bzw. Polyethylenoxid-Einheiten aufweisende Diisocyanate oder Glykole. Zu den bevorzugten hydrophil modifizierten Aufbaukomponenten gehören insbesondere die Sulfonatgruppen aufweisenden aliphatischen Diole gemäß DE—A—24 46 440, die kationischen oder auch anionischen einbaufähigen inneren Emulgatoren gemäß DE—A—26 51 506 und auch die dort beschriebenen monofunktionellen einbaufähigen Polyether. Bei der Herstellung der NCO-Präpolymeren nach an sich bekannten Prinzipien des Standes der Tecknik werden die Reaktionspartner im allgemeinen in solchen Mengenverhältnissen eingesetzt, die einem Verhältnis von Isocyanatgruppen zu gegenüber NCO-reaktiven Wasserstoffatomen, vorzugsweise aus Hydroxylgruppen, von 1,05 bis 10, vorzugsweise von 1,1 bis 3, entsprechen.

Die Reihenfolge der Zugabe der einzelnen Reaktionspartner ist hierbei weitgehend beliebig. Man kann sowohl die Hydroxylverbindungen abmischen und dazu das Polyisocyanat zufügen oder auch zur Polyisocyanatkomponente das Gemisch der Hydroxylverbindungen oder die einzelnen Hydroxylverbindungen nach und nach eintragen.

Die Herstellung der NCO-Präpolymere erfolgt vorzugsweise in der Schmelze bei 30 bis 190°C, vorzugsweise bei 50 bis 120°C. Die Herstellung der Präpolymere kann selbstverständlich auch in Gegenwart von organischen Lösungsmitteln erfolgen, obwohl ein wesentlicher Vorteil gerade in dem möglichen Verzicht auf derartige Lösungsmittel zu sehen ist. Geeignete Lösungsmittel, die z.B. zur Viskositätserniedrigung besonders hochschmelzender Präpolymerer im Mengen bis zu 30 Gew.-%, bezogen auf Feststoff, eingesetzt werden können, wären z.B. Aceton, Methylethylketon, Essigsäureethylester, Dimethylformamid, Cyclohexanon, Dioxan, Glykoldimethylether, Glykoletheracetate.

Die Art und Mengenverhältnisse der bei der Herstellung der NCO-Präpolymeren eingesetzten Ausgangsmaterialien werden im übrigen vorzugsweise so gewählt, daß die NCO-Präpolymeren

a) eine mittlere NCO-Funktionalität von 1,8 bis 2,2, vorzugsweise von etwa 2,

b) einen Gehalt an kationischen oder anionischen eingebauten Gruppen von 0 bis 100, vorzugsweise 0,1 bis 100 und insbesondere 0,5 bis 50 Milli-Äquivalent pro 100 g Feststoff,

c) einen Gehalt an seitenständig, endständig und/oder innerhalb der Hauptkette eingebauten, innerhalb eines Polyethersegments vorliegenden Ethylenoxid-Einheiten von 0 bis 30, vorzugsweise 0,5 bis 30 und insbesondere 1 bis 20 Gew.-%, bezogen auf das Gesamtgewicht des Präpolymeren und

d) ein mittleres Molekulargewicht von 500 bis 10 000, vorzugsweise 800 bis 4 000 aufweisen.

Zu den bevorzugten NCO-Präpolymeren gehören, wie bereits dargelegt, solche, welche entweder ionische Gruppen der unter b) genannten Art, d.h. insbesondere —$COO^{\ominus}$, —$SO_3^{\ominus}$ oder

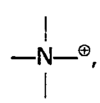,

oder nichtionische Gruppen der unter c) genannten Art oder sowohl ionische als auch nichtionische Gruppen der genannten Art aufweisen. Es ist jedoch auch möglich, beim erfindungsgemäßen Verfahren NCO-Präpolymere einzusetzen, bei deren Herstellung keine der unter 3. genannten hydrophilen Aufbaukomponenten mitverwendet wurden, bei denen der Gehalt der oben unter b) bzw. c) genannten Gruppen somit 0 beträgt.

Zur Herstellung der erfindungsgemäßen Polyadditions- bzw. Polykondensationsprodukte werden Dihydroxy- oder Diaminoverbindungen der Formel III und gegebenenfalls weitere organische Verbindungen mit mindestens zwei gegenüber Isocyanatgruppen reaktionsfähigen Gruppen mit organischen Polyisocyanaten umgesetzt. Die Reaktion kann dabei so geführt werden, daß zunächst durch Umsetzung des Polyisocyanates mit einer ersten reaktionsfähigen Verbindung ein bi- oder polyfunktionelles NCO-Präpolymer hergestellt wird, das dann mit einer zweiten und gegebenenfalls weiteren reaktionsfähigen Verbindung weiter umgesetzt wird. Die fotografisch nützliche Verbindung der Formel III kann dabei als erste, als zweite oder auch als weitere reaktionsfähige Verbindung zum Einsatz gelangen. Es ist aber auch möglich das Polyisocyanat mit einem Gemisch der reaktionsfähigen Verbindungen, das unter anderem auch die niedermolekulare fotografisch nützliche Verbindung der Formel III enthält, umzusetzen. Die Umsetzungsbedingungen sind dem Fachmann geläufig. Es handelt sich um Bedingungen, unter denen üblicherweise Polyurethane bzw. Polyharnstoffe hergestellt werden. Bevorzugt werden solche Verfahren angewendet, bei denen das Polyadditions- bzw. Polykondensationsprodukt direkt in Form einer Dispersion bzw. eines Latex anfallen.

Anschließend wird das Reaktionsgemisch mit Wasser vermischt zur Herstellung der wäßrigen Lösung bzw. Dispersion. Man benutzt hierfür zweckmäßigerweise nur so viel Wasser, daß die Lösung bzw. Dispersion einen möglichst hohen Festkörperanteil aufweist. Vorzugsweise lassen sich Lösungen bzw. Dispersionen mit 30 bis 60 Gew.-% Feststoffgehalt sehr gut herstellen. Weiteres Verdünnen mit Wasser ist

ohne weiteres möglich. Das Wasser wird vorzugsweise in einem Guß oder je nach Belieben nach und nach zugegeben. Die Vermischung des Reaktionsgemisches mit Wasser kann aber auch so erfolgen, daß des Gemisch in die wäßrige Phase eingetragen wird. Man benutzt beispielsweise Wasser von 0 bis 90°C, vorzugsweise von 15 bis 60°C.

Die entstehenden Dispersionen sind sehr feinteilig, die Teilchen haben vorzugsweise eine Größe von 20 bis 200 nm, können natürlich auch größer sein.

Die Frage, ob beim erfindungsgemäßen Verfahren Lösungen oder Dispersionen der Polyurethane bzw. Polyharnstoffe in Wasser erhalten werden, ist vor allem vom Molekulargewicht und der Hydrophilie der gelösten bzw. dispergierten Teilchen abhängig, welche ihrerseits durch geeignete Wahl von Art und Mengenverhältnis der Ausgangsmaterialien, insbesondere bei der Herstellung der NCO-Präpolymeren nach den bekannten Prinzipien der Polyurethan-Chemie eingestellt werden können. So führt beispielsweise die Verwendung von einem NCO-Präpolymeren mit der geringfügig unter 2 liegenden mittleren NCO-Funktionalität zu einem Abbruch der Polyadditionsreaktion, bevor allzu hohe Molekulargewichte erreicht sind.

Anstelle mit einer einzigen niedermolekularen fotografisch nützlichen Verbindung gemäß Formel III können die erfindungsgemäßen Polyadditions- bzw. Polykondensationsprodukte auch mit einer Mehrzahl solcher fotografisch nützlichen Verbindungen gemäß Formel III hergestellt werden, wobei sich diese verschiedenen Ausgangsmaterialien gemäß Formel III in der Bedeutung von Q unterscheiden können. Auf diese Weise ist es möglich unterschiedliche fotografische Funktionen (Q) in einem einzigen Polymer zusammenzufassen ohne daß man hinsichtlich der Stöchiometrie irgendwelchen Beschränkungen unterworfen ist. Beispielsweise ist es möglich Kupplereinheiten, die bei Farbkupplung unterschiedliche Farbstoffe liefern, in dem Polymer zusammenzufassen um auf diese Weise bei Farbkupplung eine Mischfarbe zu erzeugen. Desweiteren ist es möglich zusätzlich zu Farbkupplereinheiten weitere Struktureinheiten einer anderen Funktion, z.B. Weißkuppler- oder DIR-Kupplereinheiten in ein Polymer einzubauen. Schließlich bietet es sich auch an beispielsweise Struktureinheiten mit reduzierbaren Farbabspaltern und Struktureinheiten mit Elektronendonorvorläuferresten (verkappte Reduktionsmittel) in einem Polymer zusammenzufassen.

Nach dem erfindungsgemäßen Polyadditions- bzw. Polykondensationsverfahren werden Latices von fotografisch nützlichen Verbindungen mit geringer Teilchengröße und hoher Dispersionsstabilität erhalten.

Bei der Herstellung des fotografischen Aufzeichnungsmaterials können die Polyadditions- bzw. Polykondensationsprodukte der vorliegenden Erfindung in bekannter Weise in die Gießlösung der Silberhalogenidemulsionsschichten oder anderer Kolloidschichten eingearbeitet werden, indem sie vorzugsweise in Form von wäßrigen Dispersionen, wie sie bei der Herstellung erhalten werden können, gegebenenfalls in Anwesenheit eines Netz- oder Dispergiermittels zu einer hydrophilen Kolloidlösung zugefügt werden. Die hydrophile Gießlösung kann selbstverständlich neben dem Bindemittel andere übliche Zusätze enthalten.

Die wäßrige Dispersion braucht nicht direkt in die Gießlösung für die Silberhalogenidemulsionsschicht oder eine andere wasserdurchlässige Schicht dispergiert zu werden; sie kann vielmehr auch vorteilhaft zuerst in einer wäßrigen nicht-lichtempfindlichen Lösung eines hydrophilen Kolloids dispergiert werden, worauf das erhaltene Gemisch gegebenenfalls nach Entfernung der verwendeten organischen Lösungsmittel mit der Gießlösung für die lichtempfindliche Silberhalogenidemulsionsschicht oder einer anderen wasserdurchlässigen Schicht vor dem Auftragen vermischt wird.

Als lichtempfindliche Silberhalogenidemulsionen eignen sich Emulsionen von Silberhalogenid, Silberbromid oder Gemische davon, evtl. mit einem Geringen Gehalt an Siliodid bis zu 10 mol-% in einem der üblicherweise verwendeten hydrophilen Bindemittel. Als Bindemittel für die fotografischen Schichten wird vorzugsweise Gelatine verwendet. Diese kann jedoch ganz oder teilweise durch andere natürliche oder synthetische Bindemittel ersetzt werden.

Die Emulsionen können in der üblichen Weise chemisch oder spektral sensibilisiert sein und die Emulsionsschichten wie auch andere nicht-lichtempfindliche Schichten können in der üblichen Weise mit bekannten Härtungsmitteln gehärtet sein.

Die Schichten, die die erfindungsgemäßen Polyadditions- bzw. Polykondensationsprodukte enthalten, wie auch andere Schichten des fotografischen Aufzeichnungsmaterials, können in üblicher Weise weitere Zusätze enthalten, z.B. Lichtschutzmittel, UV-Absorber, Formalinfänger, Reduktionsmittel, Kuppler und dergleichen, wobei die genannten Zusätze in polymerer Form oder in niedermolekularer Form vorliegen können.

Für die Herstellung farbfotografischer Bilder enthält das erfindungsgemäße fotografische Aufzeichnungsmaterial in der Regel mindestens drei Silberhalogenidemulsionsschichten und diesen zugeordnete Farbkuppler, wobei in diesem Fall mindestens einer Silberhalogenidemulsionsschicht der entsprechende Farbkuppler in Form einer der erfindungsgemäßen Polyadditions- bzw. Polykondensationsprodukte zugeordnet ist. Die entsprechende Verbindung kann hierbei in der Silberhalogenidemulsionsschicht selbst oder auch in einer hierzu benachbarten nicht lichtempfindlichen Bindemittelschicht enthalten sein. Entwickelt wird in diesem Fall mit einem Farbenwickler.

Als Farbentwicklerverbindung lassen sich sämtliche Entwicklerverbindungen verwenden, die die Fähigkeit besitzen in Form ihres Oxidationsproduktes mit Farbkupplern zu Azomethinfarbstoffen zu reagieren. Geeignete Farbenwicklerverbindungen sind aromatische mindestens eine primäre Aminogruppe enthaltende Verbindungen vom p-Phenylendiamintyp, beispielsweise, N,N-Dialkyl-p-phenylendiamine, wie N,N-Diethyl-p-phenylendiamin, 1-(N-ethyl-N-methylsulfonamidoethyl)-3-methyl-p-phenylendiamin, 1-(N-ethyl-N-hydroxyethyl-3-methyl-p-phenylendiamin) und 1-(N-ethyl-N-methoxyethyl)-3-methyl-p-phenylendiamin. Andere Silberhalogenidentwicklerverbindungen können ebenfalls zur Anwendung gelangen, falls die Farbbilderzeugung nicht auf der chromogenen Entwicklung beruht.

Beispiel 1

Polyurethan-Gelbkupplerlatex A

Eine Mischung aus 68 g Hexandiol-Neopentylglykol-Polyadipat (MG 1700), 131 g Verbindung M-1 und 50 ml trockenem Toluol werden auf ca. 100°C erwärmt. Bei dieser Temperatur tropft man zügig eine Mischung aus 37 g Isophorondiisocyanat und 28 g 1,6-Hexamethylendiisocyanat zu. Die klare Lösung wird 3 h bei 105—110°C gehalten. Die NCO-Titration ergibt nach Verdünnen mit 720 ml Aceton einen Gehalt von 3,3% NCO (ber. 3,7% NCO).

397 g dieser Lösung werden bei 50°C mit einer Mischung aus 18,4 g (50 mmol) einer wäßrigen Lösung des Natriumsalzes von β'-Aminoethyl-β-aminoethansulfonsäure und 25 ml Wasser versetzt. Nach ca. 10 min dispergiert man mit 310 ml entsalztem Wasser und befreit im Vakuum vom Lösungsmittel.

Man erhält eine sehr feinteilige wäßrige Dispersion des polyurethanharnstoffmodifizierten Kupplers mit folgenden Daten:

| | |
|---|---|
| Teilchengröße: | 45 nm |
| pH: | 7,2 |
| Feststoffgehalt: | 30% |
| Äquivalentmolekulargewicht: | 1615 |

Beispiel 2

Polyurethan-Gelbkupplerlatex B

Man arbeitet völlig analog Beispiel 1, verwendet aber nunmehr lediglich 15,9 g (43 mmol) des Natriumsalzes von β'-Aminoethyl-β-aminoethansulfonsäure.

Die Aufarbeitung gemäß Beispiel 1 ergibt eine stabile Dispersion mit folgenden Daten:

| | |
|---|---|
| Teilchengröße: | 230 nm |
| pH: | 6,9 |
| Feststoffgehalt: | 30,2% |
| Äquivalentmolekulargewicht: | 1640 |

Beispiel 3

Polyurethan-Purpurkupplerlatex C

Zu einer Mischung aus 85 g (0,05 mol) Hexandiol-Neopentylglykol-Polyadipat, 125 g der Verbindung M-12 und 500 ml trockenem Toluol tropft man bei 105°C zügig eine Mischung aus 47,5 g Isophorondiisocyanat und 37,6 g 1,6-Hexamethylendiisocyanat. Nach 2-stündigem Erwärmen auf 105—110°C wird das Toluol abdestilliert. Man löst in 689 g Aceton. Der NCO-Gehalt wird zu 2,7% bestimmt.

Die acetonische Lösung wird mit einer Mischung aus 50 ml Wasser und 40,1 g einer 51,6 %igen wäßrigen Lösung des Natriumsalzes der β'-Aminoethyl-β-aminoethansulfonsäure versetzt. Nach 10 min bei 50°C dispergiert man mit 675 ml entsalztem Wasser und befreit im Vakuum vom Lösungsmittel.

Man erhält eine Dispersion mit folgenden Daten:

| | |
|---|---|
| Teilchengröße: | 375 nm |
| pH: | 7,3 |
| Feststoffgehalt: | 30,4% |
| Äquivalentmolekulargewicht: | 1057 |

Beispiel 4

Polyurethan-Purpurkupplerlatex D

Unter Ausschluß von Feuchtigkeit werden 11 g Isophorondiisocyanat und 33,5 g einer NCO-Präpolymers aus Hexandiol-Neophentylglykol-Polyadipat (Molekulargewicht 1700) und 1,6-Hexamethylendiisocyanat (NCO-Gehalt des Präpolymers 2,7%) in 300 g trockenem 3-Pentanon gelöst. Dann gibt man

eine Lösung von 16,5 g Kupplerdiol M-12 gelöst in 250 g 3-Pentanon und rührt 4 h bei Siedetemperatur. Dann gibt man 7,2 g einer 49,3 %igen wäßrigen Lösung von (β'-Aminoethyl)-β-aminoethansulfonsäure-Na-Salz zur der Reaktionslösung und tropft nach 15 min 150 g Wasser zu. Nach Abdestillieren des Lösungsmittels und Dialyse wird ein feinteiliger Polyurethan Kupplerlatex mit einem Äquivalentmolekulargewicht von 1587 erhalten.

Beispiel 5

Polyurethan-Purpurkupplerlatex E

Man verfährt wie in Beispiel 4 beschrieben, setzt aber an Stelle des Kupplerdiols M-12 22 g des Kupplerdiols M-13 ein. Es wird ein feinteiliger Polyurethan-Purpurkupplerlatex mit einem Äquivalentmolekulargewicht von 1724 erhalten.

Beispiel 6

Polyurethan-Gelbkupplerlatex F

Unter Feuchtigkeitsausschluß werden 1,8 g Isophorondiisocyanat und 6,7 g der in Beispiel 4 beschriebenen Präpolymeren in 60 g 3-Pentanon gelöst. Dann gibt man bei Raumtemperatur 6 g Kupplerdiol M-4 gelöst in 50 g 3-Pentanon und rührt dann 3 h bei Siedetemperatur. Anschließend gibt man 1,8 g einer 49,3 %igen wäßrigen Lösung des Natriumsalzes der β'-Aminoethyl-β-aminoethansulfonsäure zu der Reaktionslösung und tropft nach 15 min innerhalb von 3 min 30 g Wasser zu. Nach Abdestillieren des Lösungsmittels am Reaktionsverdampfer und Dialyse wird ein feinteiliger Polyurethan-Gelbkupplerlatex mit einem Äquivalentmolekulargewicht von 1925 erhalten.

Beispiel 7

Polyurethan-Purpurkuppler G

Zu einer Mischung aus 126 g (0,074 mol) Hexandiolneopentylglykol-polyadipat, 93 g der Verbindung M-12 und 400 ml trockenem Dioxan tropft man bei 100°C zügig eine Mischung aus 35,1 g Hexamethylendiisocyanat und 46,4 g Isophorondiisocanat. Nach 2-stündigem Erwärmen auf 100—108°C beträgt der NCO-Wert 2,9% (berechnet: 3,0%). Das Dioxan wird im Vakuum abdestilliert und durch 740 ml Aceton ersetzt. Nun versetzt man bei ca. 45°C mit einer Mischung aus 21 g einer 51,6 %igen wäßrigen Lösung des Natriumsalzes der β'-Aminoethyl-β-aminoethansulfosäure und 50 g Wasser. Man dispergiert nach 10 min mit 830 ml entsalztem Wasser. Man befreit im Vakuum vom Aceton und erhält eine feinteilige, lagerstabile Dispersion mit folgenden Daten:

| | |
|---|---|
| Teilchengröße: | 115 nm |
| pH: | 6,5 |
| Farbstoffgehalt: | 28 % |
| Äquivalentmolekulargewicht: | 1323 |

Die Einarbeitung der wäßrigen Dispersionen der erfindungsgemäßen Polyadditions- bzw. Polykondensationsprodukte in die Schichten von fotografischen Aufzeichnungsmaterialien erfolgt nach üblichen, dem Fachmann geläufigen Methoden. Hierzu wird ein wie zuvor beschrieben hergestellter Latex einer Gießlösung für eine lichtempfindliche oder nicht lichtempfindliche Schicht zugefügt und mit ihr innig vermischt, worauf die Mischung zur Schicht vergossen wird. Die Gießlösung enthält im allgemeinen ein hydrophiles Kolloid als Bindemittel, vorzugsweise Gelatine. Die erfindungsgemäßen Polyadditions- bzw. Polykondensationsprodukts können jedoch aufgrund ihrer hohen Dispersionsstabilität auch zu bindemittelarmen oder weitgehend bindemittelfreien Schichten vergossen werden.

Beispiel 8

Die Polyurethan-Purpurkupplerlatex D und E (Beispiel 4 und 5) und der Vergleichskuppler A wurden verschiedenen Proben einer Silberhalogenidemulsion zugemischt, die dem eingebrachten Farbkuppler entsprechend für Blau oder Grün sensibilisiert war. Die verwendete Silberhalogenidgelatine-Emulsion bestand aus 75 g Silberbromidjodid (Iodidgehalt 3 mol-%) und 72 g Gelatine bezogen auf 1 kg Emulsion.

Die so präparierten Emulsionen wurden auf mit einer Haftschicht versehene Cellulosetriacetatschichtträger aufgetragen und getrocknet.

Fotografische Prüfung:

Die einzelnen Proben wurden mittels eines Sensitometers belichtet und danach in der unten beschriebenen Weise verarbeitet.

Bestimmt wurden relative Empfindlichkeit, Gradation (γ), Farbausbeute und Stabilität des Farbbildes

bei Lagerung der verarbeiteten Aufzeichnungsmaterialien unter verschiedenen Bedingungen (Farbdichteabnahme).

Lager 1: 7 Tage, 77°C, 5% relative Feuchte
Lager 2: 7 Tage, 60°C, gesättigte Feuchte
a: bei Maximaldichte gemessen
b: bei Dichte 0,5 gemessen

Verarbeitungsbäder:

*Farbentwickler A*

| | |
|---|---|
| Natriummetaphosphat | 2 g |
| Natriumsulfit wasserfrei | 2 g |
| NaOH 10 %ig | 5 ml |
| Soda wasserfrei | 50 g |
| Kaliumbromid | 1 g |
| N-Ethyl-N-(β-methansulfonamido)-ethyl-4-amino-3-methylanilinsesquisulfat | 5 g |
| Benzylalkohol | 3 ml |
| Wasser bis | 1000 ml |
| pH | 10,75 |

*Bleichbad*

| | |
|---|---|
| Wasser dest. | 300 ml |
| Ammonium-Eisen-EDTA-Lösung, 50 % | 320 ml |
| Ammoniumbromid | 300 g |
| Essigsäure 80 %ig | 28 ml |
| Wasser bis 1000 ml | |

*Fixierbad Konzentrat* (wird 1:3 mit Wasser verdünnt verwendet)

| | |
|---|---|
| Wasser dest. | 140 ml |
| Ammoniumthiosulfatlösung, 56—60% | 760 ml |
| EDTA Säure | 6,0 g |
| Natriumsulfit | 119,3 g |
| Natriumdisulfit | 7,0 g |
| Ammoniakwasser 25% | 6 ml |
| Wasser dest. bis 1000 ml | |

*Stopp-Bad*

| | |
|---|---|
| Natriumacetat | 10 g |
| Eisessig | 20 ml |
| Wasser bis 1000 ml | |

*Farbentwickler B*

| | |
|---|---|
| Wasser dest. | 800 g |
| Hydroxiethandiphosphonsäure-di-Na-Salz | 2 g |
| Ethylendiamintetraessigsäure-di-Na-Salz | 2 g |
| Kaliumcarbonat | 34 g |
| Natriumhydrogencarbonat | 1,55 g |
| Natriumdisulfit | 0,28 g |
| Natriumsulfit | 3,46 g |
| Kaliumbromid | 1,34 g |
| Hydroxylaminsulfat | 2,4 g |
| N-Ethyl-N-(β-hydroxy)-ethyl-4-amino-3-ethylanilinsulfat | 4,7 g |
| Wasser dest. bis 1000 ml | |

*Verarbeitung*

| | Verarbeitung [min] | |
|---|---|---|
| | A (21°C) | B (25°C) |
| Farbentwicklung A | 15 | — |
| Farbentwicklung B | — | 10 |
| Stoppbad | 2 | 4 |
| Zwischenwässerung | 10 | 5 |
| Bleichbad | 8 | 5 |
| Zwischenwässerung | 5 | 5 |
| Fixierbad | 5 | 5 |
| Schlußwässerung | 10 | 10 |

Vergleichslatexkuppler A

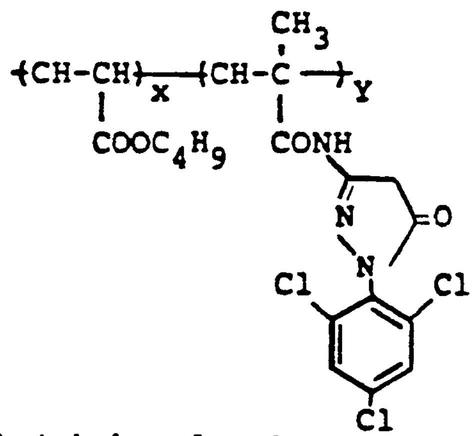

X/Y = 65/35 Gew.-%

Vergleichskuppler B

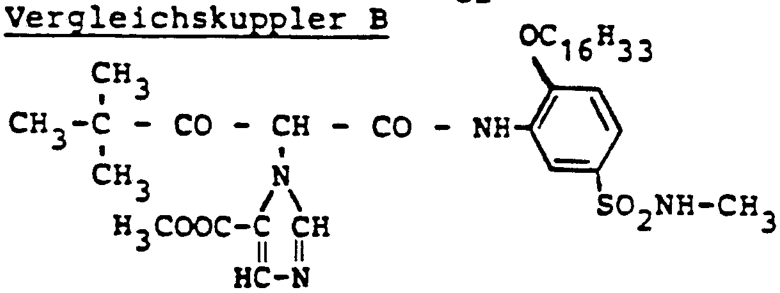

TABELLE 1

| Polyurethan-Purpurkuppler-latex | Verarbeitung | E | γ | Farbausbeute | Farbdichteabnahme 1a | 1b | 2a | 2b | $\frac{\Delta D}{Do} \cdot 100$ |
|---|---|---|---|---|---|---|---|---|---|
| E | A | 95 | 0,50 | 1,30 | 4 | 8 | 3 | 3 | |
| E | B | 97 | 0,47 | 1,47 | 5 | 4 | 0 | 0 | |
| D | A | 90 | 0,45 | 1,37 | 5 | 8 | 4 | 0 | |
| D | B | 93 | 0,45 | 1,45 | 6 | 10 | 3 | 8 | |
| Vergleichslatex-kuppler A | A | 97 | 0,50 | 1,33 | 10 | 32 | 6 | 28 | |
| " | B | 93 | 0,40 | 1,49 | 16 | 34 | 12 | 32 | |

Anmerkungen:
E = rel. Empfindlichkeit; kleinere Zahl bedeutet größere Empfindlichkeit
= Gradation

Farbdichteabnahme:
1 bedeutet: nach Lagerung (7 d, 77°C, 5% r.F.)
2 bedeutet: nach Lagerung (7 d, 60°C, gesättigte Feuchte)
a bedeutet: gemessen bei Maximaldichte
b bedeutet: gemessen bei Dichte 0,5

Aus den Werten der Tabelle 1 geht hervor, daß die erfindungsgemäßen Polyurethan-Purpurkupplerlatices in etwa mit dem Kuppler des Standes der Technik vergleichbar semitometrische Daten liefern, aber hinsichtlich des Feucht- und Trockenlagerverhaltens deutlich verbessert sind.

Beispiel 9

In einem weiteren Versuch wurden der Polyurethan-Gelbkupplerlatex F und der Vergleichskuppler B in Form einer Dibutylphthalat Emulsion in wäßriger Gelatine mit einem Dibutylphthalat/Vergleichskuppler B-Verhältnis von 1:1 wie in Beispiel 1 beschrieben auf eine Unterlage vergossen, belichtet und verarbeitet. Signifikante Unterschiede hinsichtlich der sensitometrischen Daten waren nicht meßbar. Die Proben wurden außerdem mit und ohne UV-Schutzfolie (UV-Schutzfolie mit einem 2-Hydroxyphenylbenztriazolderivat als absorbierender Substanz) dem Licht einer für Tageslicht normierten Xenonlampe ausgesetzt und mit $2,4 \cdot 10^6$ Lux·h belichtet. Die in Tabelle 2 angegebenen prozentualen Farbdichteabnahmen ΔD/Do wurden gemessen.

TABELLE 2

| Kuppler | Verarbeitung | ΔD/Do.100 ohne UV-Schutz D = 0,5 | Dmax | mit UV-Schutz D = 0,5 | Dmax |
|---|---|---|---|---|---|
| Polyurethan-Gelbkuppler-latex F | A | 25 | 10 | 8 | 6 |
| | B | 22 | 5 | 12 | 5 |
| Vergleichs-Kuppler B | A | 32 | 10 | 20 | 5 |
| | B | 46 | 22 | 29 | 9 |

Aus Tabelle 2 geht hervor, daß der erfindungsgemäße Polyurethan-Gelbkupplerlatex gegenüber dem Vergleichskuppler eine erhöhte Stabilität gegenüber schädlicher Bestrahlung aufweist.

Beispiel 10

Das Beispiel zeigt den Einfluß des erfindungsgemäßen Polyurethan-Gelbkupplerlatex F auf das Bruchverhalten von fotografischen Aufzeichnungsmaterialien.

Auf einen präparierten Cellulosetriacetat-Filmträger wurde eine fotografische Emulsionsschicht, bestehend aus einer Silberbromidemulsion, einer erfindungsgemäß hergestellten Dispersion bzw. dem Vergleichsemulgat aus Beispiel 2, Gelatine une einem Härtungsmittel, hergestellt und getrocknet. Nach der Trocknung enthielt die Schicht des Vergleichsmaterials 30 Vol-% AgBr, 15 Vol-% Vergleichskuppler B, 15 Vol-% Dibutylphthalat und 40 Vol-% Gelatine. Bei dem erfindungsgemäßen Aufzeichnungsmaterial wurde anstelle von Vergleichskuppler B und Dibutylphthalat eine hinsichtlich der Kupplereinheiten äquivalente Menge an Polyurethan-Gelbkupplerlatex F eingesetzt. 36 mm breite Streifen dieser Aufzeichnungsmaterialien wurden 3 d in einem Klima von 20% r.F. bei 17°C angeglichen. Die Messung erfolgte nach der Schleifenmethode. Die Prüflinge werden dabei zu einer Schleife zusammengefügt und durch 3 Walzen, die in Form eines Dreiecks angeordnet sind, in Rotation gebracht. Dann wird die Zahl der Umdrehungen bestimmt, die zu einem Bruch des Filmmaterials führt und mit einem Material vergleichen, das wie oben beschrieben hergestellt wird und 30 Vol-% AgBr und 70 Vol-% Gelatine an Schichtbestandteilen enthält. Die Messungen brachten folgendes Ergebnis:

| | Zahl der Umdrehungen bis zum Bruch des Materials |
|---|---|
| Polyurethan-Gelbkupplerlatex F | 255 |
| Vergleichskuppler B, 1:1 mit Dibutylphthalat emulgiert | 22 |
| Gelatine | 3,5 |

Der Versuch zeigt, daß durch die Verwendung der erfindungsgemäßen Polyurethanlatexkuppler das Bruchverhalten von fotografischen Aufzeichnungsmaterialien im Vergleich zu denjenigen mit emulgierten Farbkupplern verbessert wird.

**Patentansprüche**

1. Gegebenenfalls Polyester- und/oder Polyetherstrukturen aufweisende Polyharnstoff- und Polyurethanverbindungen mit wiederkehrenden Struktureinheiten der folgenden Formel I:

$$Q \left( Y \right)_n \qquad \text{I}$$

worin bedeuten

Q den n-bindigen Rest einer fotografisch nützlichen Verbindung
Y —O— oder —$NR^1$—
$R^1$ H, Alkyl mit 1 bis 6 C-Atomen, Cycloalkyl oder Phenyl
n eine ganze Zahl von 2 bis 4.

2. Polyharnstoff- und Polyurethanverbindungen nach Anspruch 1, gekennzeichnet durch den Gehalt an wiederkehrenden Struktureinheiten der Formel

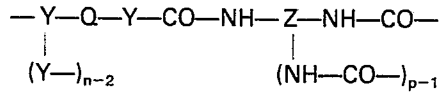

worin bedeuten
Q den n-bindigen Rest einer fotografisch nützlichen Verbindung
Y —O— oder —$NR^1$—
Z den (p + 1)-bindigen Rest einer (p + 1)-wertigen organischen Isocyanatverbindung;
$R^1$ H, Alkyl mit 1 bis 6 C-Atomen, Cycloalkyl oder Phenyl
n eine ganze Zahl von 2 bis 4
p eine Zahl ≥1.

3. Polyharnstoff- und Polyurethanverbindungen nach Anspruch 1, gekennzeichnet durch den Gehalt an wiederkehrenden Struktureinheiten der folgenden Formel II:

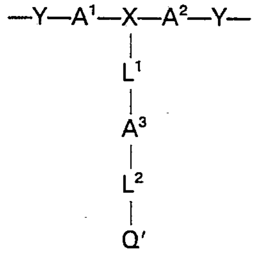

II

worin bedeuten
Q' entweder alleine oder zusammen mit X (unter Einbeziehung von —$L^1$—$A^3$—$L^2$—) den Rest einer fotografisch nützlichen Verbindung

X -CR$^2$-, -N-, 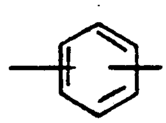 oder -O-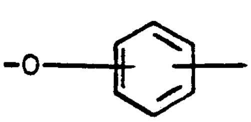-O-,

Y —O— oder —$NR^1$—

$A^1$, $A^2$ Alkylen mit 1 bis 4 C-Atomen
$A^3$ Alkylen mit 1 bis 8 C-Atomen, Arylen oder eine chemische Bindung
$L^1$ —CONH—, —NHCO—, —CO—, —$SO_2$—, —O— oder eine chemische Bindung
$L^2$ —CONH—, —NH—, —O— oder eine chemische Bindung
$R^1$ H, Alkyl mit 1 bis 6 C-Atomen, Cycloalkyl oder Phenyl
$R^2$ H oder Alkyl mit 1 bis 4 C-Atomen.

4. Polyharnstoff- und Polyurethanverbindungen nach Anspruch 2, gekennzeichnet durch den Gehalt an wiederkehrenden Struktureinheiten der Formel

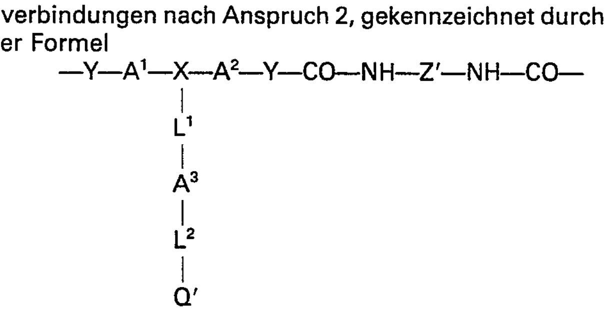

worin bedeuten
Q' entweder alleine oder zusammen mit X (unter Einbeziehung von —$L^1$—$A^3$—$L^2$—) den Rest einer fotografisch nützlichen Verbindung

X $-CR^2-$, $-N-$, 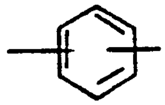 oder 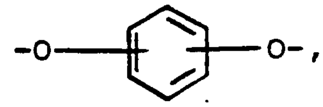

Y $-O-$ oder $-NR^1-$

Z' den zweibindigen Rest einer organischen Diisocyanatverbindung
$A^1$, $A^2$ Alkylen mit 1 bis 4 C-Atomen
$A^3$ Alkylen mit 1 bis 8 C-Atomen, Arylen oder eine chemische Bindung
$L^1$ $-CONH-$, $-NHCO-$, $-CO-$, $-SO_2-$, $-O-$ oder eine chemische Bindung
$L^2$ $-CONH-$, $-NH-$, $-O-$ oder eine chemische Bindung
$R^1$ H, Alkyl mit 1 bis 6 C-Atomen, Cycloalkyl oder Phenyl
$R^2$ H oder Alkyl mit 1 bis 4 C-Atomen.

5. Polyharnstoff- und Polyurethanverbindungen nach Anspruch 1, dadurch gekennzeichnet, daß Q in Formel I für einen Molekülrest steht, der mit Entwickleroxidationsprodukten zu reagieren vermag.

6. Wäßrige Dispersion einer Polyharnstoff- oder Polyurethanverbindung gemäß Anspruch 1.

7. Fotografisches Aufzeichnungsmaterial mit mindestens einer lichtempfindlichen Silberhalogenidemulsionsschicht, gekennzeichnet durch den Gehalt an einer gegebenenfalls Polyester- und/oder Polyetherstrukturen aufweisenden Polyharnstoff- oder Polyurethanverbindung mit wiederkehrenden Strukturelementen der folgenden Formel I:

$$Q \left( Y \right)_n \qquad \text{I}$$

worin bedeuten
Q den n-bindigen Rest einer fotografisch nützlichen Verbindung
Y $-O-$ oder $-NR^1-$
$R^1$ H, Alkyl mit 1 bis 6 C-Atomen, Cycloalkyl oder Phenyl
n eine ganze Zahl von 2 bis 4.

8. Aufzeichnungsmaterial nach Anspruch 7, dadurch gekennzeichnet, daß die Polyharnstoff- oder Polyurethanverbindung wiederkehrende Struktureinheiten der folgenden Formel II enthält:

$$\begin{array}{c} -Y-A^1-X-A^2-Y- \\ | \\ L^1 \\ | \\ A^3 \\ | \\ L^2 \\ | \\ Q' \end{array} \qquad \text{II}$$

worin bedeuten
Q' entweder alleine oder zusammen mit X (unter Einbeziehung von $-L^1-A^3-L^2-$) den Rest einer fotografisch nützlichen Verbindung

X $-CR^2-$, $-N-$, 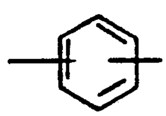 oder 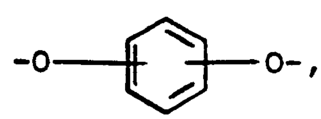

Y $-O-$ oder $-NR^1-$

$A^1$, $A^2$ Alkylen mit 1 bis 4 C-Atomen
$A^3$ Alkylen mit 1 bis 8 C-Atomen, Arylen oder eine chemische Bindung
$L^1$ $-CONH-$, $-NHCO-$, $-CO-$, $-SO_2-$, $-O-$ oder eine chemische Bindung
$L^2$ $-CONH-$, $-NH-$, $-O-$ oder eine chemische Bindung
$R^1$ H, Alkyl mit 1 bis 6 C-Atomen, Cycloalkyl oder Phenyl
$R^2$ H oder Alkyl mit 1 bis 4 C-Atomen.

9. Fotografisches Aufzeichnungsmaterial nach Anspruch 7 oder Anspruch 8, dadurch gekennzeichnet, daß Q in Formel I bzw. Q' in Formel II für einen Molekülrest steht, der mit Entwickleroxidationsprodukten zu reagieren vermag.

10. Fotografisches Aufzeichnungsmaterial nach Anspruch 9, dadurch gekennzeichnet, daß Q in Formel I bzw. Q' in Formel II für den Rest eines Gelb-, Purpur-, Blaugrün- oder Weißkupplers steht.

**Revendications**

1. Composés de type polyurée et polyuréthanne présentant éventuellement des structures de polyester et/ou de polyéther, comprenant des motifs structuraux récurrents de formule I suivante:

$$Q\!-\!\!(Y)_{n}\!- \qquad \text{I}$$

dans laquelle
Q désigne le reste n-valent d'un composé utile en photographie
Y représente —O— ou —$NR^1$—
$R^1$ représente H, un groupe alkyle de 1 à 6 atomes de carbone, cycloalkyle ou phényle
n est un nombre entier de 2 à 4.

2. Composés de type polyurée et polyuréthanne suivant la revendication 1, caractérisés par la présence de motifs structuraux récurrents de formule

$$\begin{array}{l}—Y—\underset{\substack{|\\(Y—)_{n-2}}}{Q}—Y—CO—NH—\underset{\substack{|\\(NH—CO—)_{p-1}}}{Z}—NH—CO—\end{array}$$

dans laquelle
Q est le reste n-valent d'un composé utile en photographie
Y représente —O— ou —$NR^1$—
Z est le reste (p + 1)-valent d'un composé organique (p + 1)-valent du type isocyanate
$R^1$ représente H, un groupe alkyle de 1 à 6 atomes de carbone, cycloalkyle ou phényle
n est un nombre entier de 2 à 4
p est un nombre supérieur ou égal à 1.

3. Composés du type polyurée et polyuréthanne suivant la revendication 1, caractérisés par la présence de motifs structuraux récurrents de formule II suivante:

$$\begin{array}{c}—Y—A^1—X—A^2—Y—\\ |\\ L^1\\ |\\ A^3\\ |\\ L^2\\ |\\ Q'\end{array} \qquad \text{II}$$

dans laquelle
Q' désigne individuellement ou conjointement avec X (en y incorporant —$L^1$—$A^3$—$L^2$—) le reste d'un composé utile en photographie

X représente 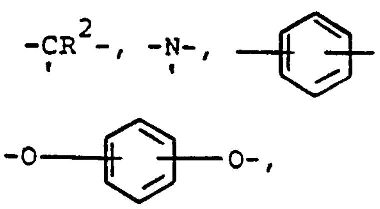 ou

Y représente —O— ou —$NR^1$—

$A^1$, $A^2$ sont des groupes alkylène de 1 à 4 atomes de carbone
$A^3$ est un groupe alkylène de 1 à 8 atomes de carbone, un groupe arylène ou une liaison chimique
$L^1$ est un groupe —CONH—, —NHCO—, —CO—, —$SO_2$—, —O— ou une liaison chimique
$L^2$ est un groupe —CONH—, —NH—, —O— ou une liaison chimique
$R^1$ représente H, un groupe alkyle de 1 à 6 atomes de carbone, cycloalkyle ou phényle
$R^2$ représente H ou un groupe alkyle de 1 à 4 atomes de carbone.

4. Composés de type polyurée et polyuréthanne suivant la revendication 2, caractérisés par la présence de motifs structuraux récurrents de formule

$$-Y-A^1-X-A^2-Y-CO-NH-Z'-NH-CO-$$

|

$L^1$

|

$A^3$

|

$L^2$

|

$Q'$

dans laquelle

Q' désigne individuellement ou conjointement avec X (en y incorporant $-L^1-A^3-L^2-$) le reste d'un composé utile en photographie

X représente 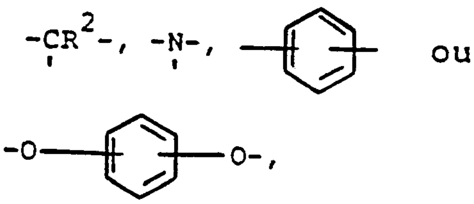

Y représente —O— ou $-NR^1-$

Z' est le reste divalent d'un composé organique du type diisocyanate

$A^1$, $A^2$ sont des groupes alkylène de 1 à 4 atomes de carbone

$A^3$ est un groupe alkylène de 1 à 8 atomes de carbone, un groupe arylène ou une liaison chimique

$L^1$ est un groupe —CONH—, —NHCO—, —CO—, $-SO_2-$, —O— ou une liaison chimique,

$L^2$ est un groupe —CONH—, —NH—, —O— ou une liaison chimique

$R^1$ représente H, un groupe alkyle ayant 1 à 6 atomes de carbone, cycloalkyle ou phényle

$R^2$ représente H ou un groupe alkyle de 1 à 4 atomes de carbone.

5. Composés de type polyurée et polyuréthanne suivant la revendication 1, caractérisés en ce que Q dans la formule I représente un reste de molécule qui peut réagir avec des produits d'oxydation de révélateurs.

6. Dispersion aqueuse d'un composé du type polyurée ou polyuréthanne suivant la revendication 1.

7. Support d'enregistrement photographique comportant au moins une couche photosensible d'émulsion à l'halogénure d'argent, caractérisé par une teneur en un composé du type polyurée ou polyuréthanne présentant éventuellement des structures de polyester et/ou de polyéther, comprenant des éléments structuraux récurrents de formule I suivante:

$$Q\left(Y\right)_n \qquad I$$

dans laquelle

Q désigne le reste n-valent d'un composé utile en photographie

Y représente —O— ou $-NR^1-$

$R^1$ représente H, un groupe alkyle de 1 à 6 atomes de carbone, un groupe cycloalkyle ou un groupe phényle

n est un nombre entier de 2 à 4.

8. Support d'enregistrement suivant la revendication 7, caractérisé en ce que le composé du type polyurée ou polyuréthanne comporte des motifs structuraux récurrents de formule II suivante:

$$-Y-A^1-X-A^2-Y- \qquad II$$

|

$L^1$

|

$A^3$

|

$L^2$

|

$Q'$

dans laquelle

Q' désigne individuellement ou conjointement avec X (en y incorporant —$L^1$—$A^3$—$L^2$—) le reste d'un composé utile en photographie

X représente 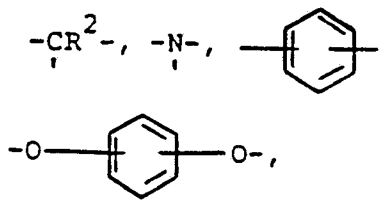 ou

Y représente —O— ou —$NR^1$—
|

$A^1$, $A^2$ sont des groupes alkylène de 1 à 4 atomes de carbone
$A^3$ est un groupe alkylène de 1 à 8 atomes de carbone, un groupe arylène ou une liaison chimique
$L^1$ est un groupe —CONH—, —NHCO—, —CO—, —$SO_2$—, —O— ou une liaison chimique
$L^2$ est un groupe —CONH—, —NH—, —O— ou une liaison chimique
$R^1$ représente H, un groupe alkyle ayant 1 à 6 atomes de carbone, cycloalkyle ou phényle
$R^2$ représente H ou un groupe alkyle de 1 à 4 atomes de carbone.

9. Support d'enregistrement photographique suivant la revendication 7 ou la revendication 8, caractérisé en ce que Q dans la formule I ou Q' dans la formule II représente un reste de molécule qui peut réagir avec des produits d'oxydation de révélateurs.

10. Support d'enregistrement photographique suivant la revendication 9, caractérisé en ce que Q dans la formule I et Q' dans la formule II représentent le reste d'un copulant jaune, magenta, cyan ou blanc.

**Claims**

1. Polyurea and polyurethane compounds optionally containing polyester and/or polyether structures and bearing recurring structural units corresponding to formula I:

$$Q(-Y)_n \qquad I$$

in which
Q is the n-bond residue of a photographically useful compound,
Y is —O— or —$NR^1$—,
$R^1$ is H, $C_{1-6}$ alkyl, cycloalkyl or phenyl,
n is an integer of 2 to 4.

2. Polyurea and polyurethane compounds as claimed in claim 1, characterized by a content of recurring structural units corresponding to the formula:

```
—Y—Q—Y—CO—NH—Z—NH—CO—
    |             |
 (Y—)n-2      (NH—CO—)p-1
```

in which
Q is the n-bond residue of a photographically useful compound;
Y is —O— or —$NR^1$—;
Z is the (p + 1)-bond residue of a (p + 1)-functional organic isocyanate compound;
$R^1$ is H, $C_{1-6}$ alkyl, cycloalkyl or phenyl;
n is an integer of 2 to 4;
p is an integer of ≥1.

3. Polyurea and polyurethane compounds as claimed in claim 1, characterized by a content of recurring structural units corresponding to formula II:

```
—Y—A¹—X—A²—Y—
       |
       L¹
       |
       A³            II
       |
       L²
       |
       Q'
```

in which

Q′ either on its own or together with X (including $—L^1—A^3—L^2—$), represents the residue of a photographically useful compound,

X represents 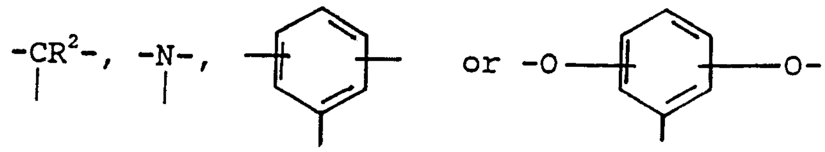

$A^1$, $A^2$ represent $C_{1-4}$ alkylene,
$A^3$ represents $C_{1-8}$ alkylene, arylene or a chemical bond,
$L^1$ represents —CONH—, —NHCO—, —CO—, $—SO_2—$, —O— or a chemical bond,
$L^2$ represents —CONH—, —NH—, —O— or a chemical bond,
$R^1$ represents H, $C_{1-6}$ alkyl, cycloalkyl or phenyl,
$R^2$ represents H or $C_{1-4}$ alkyl.

4. Polyurea and polyurethane compounds as claimed in claim 2, characterized by a content of recurring structural units corresponding to the formula

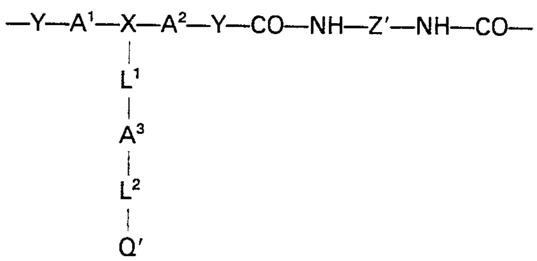

in which

Q′ either on its own or together with X (including $—L^1—A^3—L^2—$), represents the residue of a photographically useful compound,

X represents 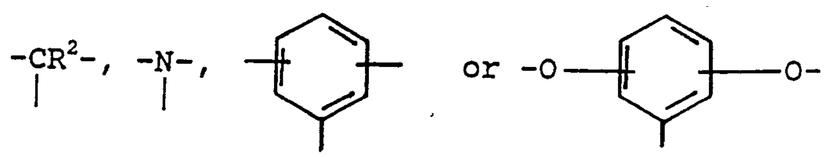

Y represents —O— or $—NR^1—$,

Z′ is the two-bond residue of an organic diisocyanate compound,
$A^1$, $A^2$ represent $C_{1-4}$ alkylene,
$A^3$ represents $C_{1-8}$ alkylene, arylene or a chemical bond,
$L^1$ represents —CONH—, —NHCO—, —CO—, $—SO_2—$, —O— or a chemical bond,
$L^2$ represents —CONH—, —NH—, —O— or a chemical bond,
$R^1$ represents H, $C_{1-6}$ alkyl, cycloalkyl or phenyl,
$R^2$ represents H or $C_{1-4}$ alkyl.

5. Polyurea and polyurethane compounds as claimed in claim 1, characterized in that Q in formula I is part of a molecule which is capable of reacting with developer oxidation products.

6. An aqueous dispersion of the polyurea or polyurethane compound claimed in claim 1.

7. A photographic recording material comprising at least one photosensitive silver halide emulsion layer, characterized by a content of a polyurea or polyurethane compound optionally containing polyester and/or polyether structures and bearing recurring structural elements corresponding to formula I

$$Q\text{-}(Y)_n \qquad \text{I}$$

in which

Q is the n-bond residue of a photographically useful compound,
Y is —O— or $—NR^1—$,
$R^1$ is H, $C_{1-6}$ alkyl, cycloalkyl or phenyl,
n is an integer of 2 to 4.

8. A recording material as claimed in claim 7, characterized in that the polyurea or polyurethane compound contains recurring structural units corresponding to formula II

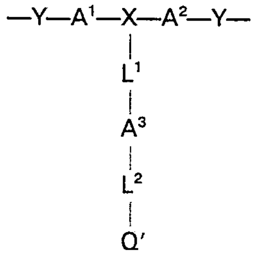

II

in which

Q' either on its own or together with X (including $—L^1—A^3—L^2—$), represents the residue of a photographically useful compound,

X represents 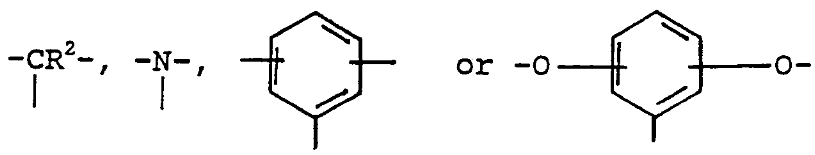 or

$A^1$, $A^2$ represent $C_{1-4}$ alkylene,

$A^3$ represents $C_{1-8}$ alkylene, arylene or a chemical bond,

$L^1$ represents —CONH—, —NHCO—, —CO—, $—SO_2—$, —O— or a chemical bond,

$L^2$ represents —CONH—, —NH—, —O— or a chemical bond,

$R^1$ represents H, $C_{1-6}$ alkyl, cycloalkyl or phenyl,

$R^2$ represents H or $C_{1-4}$ alkyl.

9. A photographic recording material as claimed in claim 7 or claim 8, characterized in that Q in formula I or Q' in formula II represents part of a molecule which is capable of reacting with developer oxidation products.

10. A photographic recording material as claimed in claim 9, characterized in that Q in formula I or Q' in formula II is the residue of a yellow, magenta, cyan or white coupler.